# EUROPÄISCHE PATENTSCHRIFT

(11) **EP 3 516 632 B1**
(45) Veröffentlichungstag und Bekanntmachung des Hinweises auf die Patenterteilung: **11.11.2026**
(21) Anmeldenummer: 17780033.1
(22) Anmeldetag: 20.09.2017
(51) Int. Cl.: G07C 9/00, B60R 25/24

(54) **VERFAHREN ZUR AKTIVIERUNG MINDESTENS EINER FUNKTION EINES FAHRZEUGS**
METHOD FOR ACTIVATING AT LEAST ONE FUNCTION OF A VEHICLE
PROCÉDÉ POUR ACTIVER AU MOINS UNE FONCTION D'UN VÉHICULE

(30) Priorität: 20.09.2016 DE 102016117654
(43) Veröffentlichungstag der Anmeldung: 31.07.2019
(73) Patentinhaber: HUF Hülsbeck & Fürst GmbH & Co. KG, 42551 Velbert (DE)
(72) Erfinder: NEUHOFF, Stefan, 45239 Essen (DE)
(74) Vertreter: Bals & Vogel Patentanwälte PartGmbB
(86) Internationale Anmeldenummer: PCT/EP2017/073726
(87) Internationale Veröffentlichungsnummer: WO 2018/054943

(56) Entgegenhaltungen:
- WO-A1-2009/030563
- DE-A1- 102014 107 186
- US-A1- 2010 075 655

## Beschreibung

Die vorliegende Erfindung betrifft ein Verfahren zur Aktivierung mindestens einer Funktion eines Fahrzeugs nach dem Oberbegriff des unabhängigen Verfahrensanspruchs. Ferner bezieht sich die Erfindung auf ein System zur Aktivierung mindestens einer Funktion eines Fahrzeugs nach dem unabhängigen Vorrichtungsanspruch.

Es ist aus dem Stand der Technik bekannt, dass sogenannte Identifikationsgeber (ID-Geber) als elektronische Schlüssel zur Authentifizierung bei einem Fahrzeug eingesetzt werden. Hierzu erfolgt bspw. eine drahtlose Kommunikation zwischen dem ID-Geber und dem Fahrzeug, um einen Code zu übertragen, welcher dann von dem Fahrzeug geprüft wird und bei Übereinstimmung der Zugang zum Fahrzeug gestattet wird. Üblicherweise erfolgt zur Initiierung der Authentifizierung ein manuelles Betätigen des ID-Gebers durch den Bediener des Fahrzeugs.

Zunehmend werden jedoch auch Keyless-Go-Systeme eingesetzt, bei welchen auf eine derartige manuelle Betätigung verzichtet werden kann. Hierbei wird die Annäherung des Bedieners mit dem ID-Geber an das Fahrzeug erkannt und bei einer ausreichenden Annäherung die Authentifizierung initiiert. Bspw. bewirkt die Annäherung oder das Berühren des Türgriffs, dass der Authentifizierungsvorgang eingeleitet wird, sodass dann bei erfolgreicher Authentifizierung der Zugang zum Fahrzeug möglich ist (z. B. durch Öffnen eines Türschlosses). Im Anschluss kann es möglich sein, dass zum Starten des Motors ebenfalls eine derartige Authentifizierung erfolgt. Hierzu ist es notwendig, dass der ID-Geber innerhalb des Fahrzeugs geortet wird, sodass nach einem Aussteigen des Bedieners mit dem ID-Geber der Motorstart bzw. der Betrieb des Fahrzeugs verhindert ist.

Solche Systeme werden offenbart in US 2010/075655 A1 und WO 2009/030563 A1.

Hierbei ist ein Problem, dass die Innen-Außenraum-Erkennung, d. h. die Lokalisation des ID-Gebers innerhalb oder außerhalb des Fahrzeugs, sehr schwierig und technisch aufwendig durchführbar ist. Insbesondere ist die Innen-Außenraum-Erkennung herkömmlicher Authentifizierungssysteme bzw. Authentifizierungsverfahren technisch sehr aufwendig, um einen komfortablen und/oder sicheren Betrieb des Fahrzeugs stets und/oder ausreichend zu gewährleisten.

Es ist daher eine Aufgabe der vorliegenden Erfindung, die voranstehend beschriebenen Nachteile zumindest teilweise zu beheben. Insbesondere ist eine Aufgabe der vorliegenden Erfindung, eine sichere und zuverlässige Authentifizierung zu ermöglichen. Insbesondere soll eine verbesserte Innen-Außenraum-Erkennung vorgeschlagen werden, welche bevorzugt kostengünstiger und/oder technisch einfacher umzusetzen ist.

Die voranstehende Aufgabe wird gelöst durch ein Verfahren mit den Merkmalen des Anspruchs 1 und durch ein System mit den Merkmalen des unabhängigen Vorrichtungsanspruchs. 13.

Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System, und jeweils umgekehrt, so dass bezüglich der Offenbarung zu den einzelnen Erfindungsaspekten stets wechselseitig Bezug genommen wird bzw. werden kann.

Insbesondere wird die Aufgabe gelöst durch ein Verfahren, vorzugsweise Authentifizierungsverfahren, zur Aktivierung mindestens einer Funktion eines Fahrzeugs, vorzugsweise bei einem Sicherheitssystem eines Fahrzeugs. Das Fahrzeug ist bspw. ein Kraftfahrzeug und/oder ein Elektrofahrzeug und/oder ein Personenkraftfahrzeug und/oder ein Lastkraftfahrzeug und/oder ein Hybridfahrzeug. Das Sicherheitssystem ist insbesondere ein Zugangssystem und/oder ein Keyless-Go-System und/oder ein Authentifizierungssystem des Fahrzeugs. Vorzugsweise umfasst das Sicherheitssystem zumindest eine der folgenden Funktionen und/oder dient das erfindungsgemäße Verfahren zur Aktivierung zumindest einer der folgenden Funktionen:
- Freigabe eines Motorstarts,
- Freigabe der Aktivierung einer Stromversorgung von elektronischen Komponenten des Fahrzeugs,
- Entriegeln des Fahrzeuges, insbesondere einer Zentralverriegelung des Fahrzeuges,
- Freigabe und/oder Öffnen eines Türschlosses, insbesondere eines elektrischen bzw. elektronischen Schlosses, des Fahrzeugs,
- Freigabe und/oder Aktivieren von Komfortfunktionen des Fahrzeugs, z. B. von einer Vorfeldbeleuchtung des Fahrzeugs,
- Abrufen und/oder Aktivieren von Voreinstellungen, insbesondere benutzerspezifischen Voreinstellungen, wie z. B. einer Maximalgeschwindigkeit, durch welche der Betrieb des Fahrzeugs parametrisiert wird.

Bevorzugt ist ein mobiles Kommunikationsgerät, insbesondere ein Mobiltelefon und/oder ein Smartphone und/oder ein Tablet und/oder ein Computer und/oder ein ID-Geber, vorgesehen, welches zur (mindestens einen) Kommunikation (d. h. z. B. zu einer ersten und/oder zu einer zweiten Kommunikation und/oder zur Mobilfunkkommunikation) dient.

Vorzugsweise wird zumindest einer der nachfolgenden Schritte durchgeführt, wobei die Schritte insbesondere nacheinander oder in beliebiger Reihenfolge durchgeführt werden, und/oder einzelne Schritte auch wiederholt durchgeführt werden können:
a) Überwachen der Kommunikation (d. h. insbesondere zumindest einer der Kommunikationen), insbesondere einer Mobilfunkkommunikation und/oder einer GPS-Kommunikation und/oder einer ersten Kommunikation und/oder einer Kommunikation zur Datenübertragung, wobei mindestens ein für die Kommunikation spezifisches Auswertungssignal ermittelt wird,
b) Detektieren eines Fahrzeugeinflusses auf eine Übertragung, insbesondere auf eine Signalübertragung und/oder auf einen Signalweg, bei der Kommunikation anhand einer Auswertung des Auswertungssignals, um eine Lokalisation (insbesondere Innen-Außenraum-Erkennung) des Kommunikationsgeräts, vorzugsweise in Bezug auf einen Fahrzeuginnenraum des Fahrzeugs, durchzuführen. Insbesondere ist dabei der Fahrzeugeinfluss für einen Standort des Kommunikationsgeräts in Bezug auf den Fahrzeuginnenraum und/oder in Bezug auf einzelne Bereiche im Fahrzeuginnenraum spezifisch,
c) Aktivieren der Funktion des Fahrzeugs in Abhängigkeit von der Detektion des Fahrzeugeinflusses.

Mit anderen Worten kann insbesondere anhand der Detektion des Fahrzeugeinflusses festgestellt werden, an welchem Ort (innerhalb oder außerhalb des entsprechenden Fahrzeugs) sich das Kommunikationsgerät befindet, und in Abhängigkeit davon die Funktion des Fahrzeugs aktiviert werden. So ist es bspw. denkbar, dass eine erste Funktion in einer ersten Abhängigkeit von der Detektion des Fahrzeugeinflusses aktivierbar ist, und eine zweite Funktion in einer zweiten Abhängigkeit von der Detektion des Fahrzeugeinflusses aktivierbar ist. Als erste Funktion kann bspw. ein Zugang zum Fahrzeug, insbesondere ein Entriegeln und/oder eine Öffnung eines Schlosses des Fahrzeugs, dann aktiviert werden, wenn die Detektion des Fahrzeugeinflusses unterbleibt (d. h. der Fahrzeugeinfluss nicht positiv detektiert wird). Vorzugsweise ist dabei gemäß der ersten Funktion der Motorstart gesperrt (nicht freigegeben). Als eine zweite Funktion kann bspw. ein Motorstart dann freigegeben / zugelassen werden, wenn der Fahrzeugeinfluss (positiv) detektiert wird. Im ersten Fall kann aus dem Ausbleiben der Detektion des Fahrzeugeinflusses insbesondere geschlossen werden, dass sich das Kommunikationsgerät außerhalb des Fahrzeugs befindet. Im zweiten Fall kann anhand der Detektion des Fahrzeugeinflusses, d. h. dem Vorliegen des Fahrzeugeinflusses auf die Übertragung, darauf geschlossen werden, dass sich das Kommunikationsgerät innerhalb des Fahrzeugs befindet. Alternativ oder zusätzlich wird bspw. als erste Funktion ein Wert bzw. Flag gesetzt, um anzugeben, dass sich das Kommunikationsgerät außerhalb des Fahrzeuges befindet, wenn die Lokalisation des Kommunikationsgeräts außerhalb des Fahrzeuges erfolgt. Als zweite Funktion wird bspw. der Wert bzw. Flag so verändert, dass angegeben wird, dass sich das Kommunikationsgerät innerhalb des Fahrzeuges befindet, wenn die Lokalisation des Kommunikationsgeräts innerhalb des Fahrzeuges erfolgt. Dies hat den Vorteil, dass in einfacher Weise und sehr zuverlässig eine Lokalisation (Ortung, insbesondere Innen-Außenraum-Erkennung) des Kommunikationsgeräts erfolgen kann.

Insbesondere wird durch das erfindungsgemäße Verfahren der Vorteil erlangt, dass eine bereits vorhandene Kommunikation, insbesondere Kommunikationsverbindung, (z. B. zwischen dem Kommunikationsgerät und/oder dem Fahrzeug oder zwischen dem Kommunikationsgerät in einem Kommunikationsnetzwerk, z. B. einem Mobilfunknetz) genutzt wird, um eine Innen-Außenraum-Erkennung durchzuführen. Unter der Innen-Außenraum-Erkennung wird insbesondere verstanden, dass unterschieden werden kann, ob sich das Kommunikationsgerät im Fahrzeuginnenraum oder außerhalb des Fahrzeugs (Fahrzeugaußenraum) befindet. Selbstverständlich ist es auch denkbar, dass eine weitergehende Lokalisation durch das erfindungsgemäße Verfahren möglich ist, sodass bspw. auch unterschieden werden kann, wenn sich das Kommunikationsgerät in unterschiedlichen Bereichen im Fahrzeuginnenraum und/oder unterschiedlichen Bereich im Fahrzeugaußenraum befindet. Die unterschiedlichen / unterscheidbaren Bereiche sind bspw. unterschiedliche Fahrzeugseiten, und/oder Vorder- und Hintersitze, und/oder Fahrer- und Beifahrersitz, und/oder links- und rechtsseitig am Fahrzeug, und/oder Fahrzeugvorderseite und Fahrzeugheck. Die Lokalisation kann dann bspw. auch durch Sensoren in den jeweiligen Bereichen unterstützt werden.

Insbesondere ist der Fahrzeugeinfluss auf die Übertragung dahingehend zu verstehen, dass die Beeinflussung durch den Fahrzeugeinfluss die physikalische Beeinflussung der Übertragung einer bestehenden Kommunikation ist, und damit insbesondere ohne aktive Teilnahme an der Kommunikation z. B. durch einen Datenaustausch bei der Kommunikation erfolgt. Bevorzugt ist dabei die Auswertung gemäß Schritt b) nicht die Auswertung des Inhalts der Kommunikation, z. B. der Kommunikationsdaten, sondern eine Signalauswertung, d. h. insbesondere der Eigenschaften des Signals, z. B. der Signalstärke und/oder eines Musters in einem Frequenzspektrum des Signals. Unter dem Fahrzeugeinfluss, insbesondere als die physikalische Beeinflussung der Übertragung, ist insbesondere eine Beeinflussung des Übertragungswegs und/oder der Signal- und/oder Wellenausbreitung und/oder der Amplitude (und/oder Frequenz) der Funksignale bzw. elektromagnetischen Wellen der Kommunikation zu verstehen.

Es ist ferner denkbar, dass das Auswertungssignal ein Signal mit Informationen über die Signalstärke und/oder ein Frequenzspektrum eines Kommunikationssignals der Kommunikation ist. Alternativ oder zusätzlich ist es denkbar, dass das Auswertungssignal ein Zeitreihensignal ist und/oder eine Folge von Daten aufweist, welche zur Erfassung des Fahrzeugeinflusses ausgewertet werden können, z. B. mit Informationen über eine Signalstärke und/oder ein Frequenzspektrum und/oder eine Modulation eines Kommunikationssignals der Kommunikation, und/oder dergleichen.

Es ist denkbar, dass es zur Auswertung des Auswertungssignals (gemäß Schritt b)) und/oder zur Detektion gemäß Schritt b) vorgesehen ist, dass eine (z. B. statistische) Analyse und/oder Filterung und/oder Transformation und/oder Zeitreihenanalyse und/oder Mustererkennung und/oder dergleichen bei dem Auswertungssignal erfolgt. Insbesondere wird zur Initiierung und/oder Durchführung der Auswertung eine Software (z. B. des Kommunikationsgeräts, insbesondere eine Smartphone-App) gestartet und/oder parametrisiert, sodass die Auswertung durch die Software, z. B. durch einen Algorithmus, erfolgt. Das Starten der Software erfolgt bspw. durch bzw. bei einer Initiierung und/oder einem Triggern der Überwachung gemäß Schritt a) und/oder der Detektion gemäß Schritt b). Insbesondere wird zum Übertragen und/oder Starten und/oder Parametrisieren eine Datenverbindung zwischen dem Fahrzeug und dem Kommunikationsgerät genutzt, z. B. um eine Datei und/oder einen Startbefehl und/oder Parameterwerte von dem Fahrzeug an das Kommunikationsgerät zu übertragen. Die Datenverbindung ist bspw. eine zweite oder dritte Kommunikation (insbesondere der möglichen Kommunikationen des Kommunikationsgeräts), vorzugsweise eine Bluetooth- (z. B. Bluetooth-Low Energy) Kommunikation.

Des Weiteren wird insbesondere unter Kommunikation im Rahmen der Erfindung eine drahtlose Kommunikation, z. B. eine Mobilfunkkommunikation und/oder eine Bluetooth-Kommunikation, insbesondere eine Bluetooth-Low Energy Kommunikation, und/oder eine NFC (near field communication) -Kommunikation und/oder dergleichen verstanden. Vorzugsweise wird unter Kommunikation (im weiteren Sinne) auch ein Empfang eines GPS (global positioning system) verstanden. Insbesondere erfolgt also die Kommunikation als eine bidirektionale oder unidirektionale Kommunikation zwischen dem Kommunikationsgerät und zumindest einem weiteren Kommunikationsteilnehmer, z. B. dem Fahrzeug und/oder einer Basisstation eines Mobilfunknetzes oder dergleichen. Dies ermöglicht einen vielseitigen Einsatz des erfindungsgemäßen Systems.

Es ist denkbar, dass das Kommunikationsgerät zur Kommunikation bspw. nur eine Kommunikation oder auch mehrere Kommunikationen (d. h. insbesondere Kommunikationsmöglichkeiten) gleicher oder unterschiedlicher Kommunikationsart durchführen und/oder unterstützen kann. Neben der Kommunikation als eine erste Kommunikation kann auch eine zweite Kommunikation (z. B. Fahrzeug-Kommunikation) mit dem Fahrzeug vorgesehen sein. Auch kann es möglich sein, dass weitere erste Kommunikationen vorgesehen sind, z. B. als Kommunikationsmöglichkeiten unterschiedlicher Kommunikationsart und/oder unterschiedlicher Frequenz, z. B. unterschiedlicher Mobilfunkfrequenz.

Vorzugsweise erfolgt die Aktivierung (z. B. der ersten und/oder zweiten Funktion) gemäß Schritt c) nur dann, wenn das Kommunikationsgerät im Innenraum des Fahrzeugs lokalisiert wird und/oder wenn ein hinreichend starker Fahrzeugeinfluss detektiert wird, sodass das Kommunikationsgerät zuverlässig im Innenraum lokalisiert werden kann. Der Innenraum ist dabei bspw. der Passagierbereich des Fahrzeugs. Die Lokalisation, insbesondere Ortung bzw. Positionsbestimmung, erfolgt dabei zur Unterscheidung von mindestens zwei Standorten des Kommunikationsgeräts, z. B. innerhalb und außerhalb des Fahrzeugs. Erfindungsgemäß wird sich dabei insbesondere zu Nutzen gemachen, dass anhand der Detektion des Fahrzeugeinflusses die Lokalisation möglich ist. Dies wird insbesondere dadurch bewirkt, dass der Fahrzeugeinfluss auf die Kommunikation ortsabhängig in Bezug auf das Kommunikationsgerät erfolgt.

Bspw. ist der Fahrzeugeinfluss ein (insbesondere auch rein / ausschließlich) passiver Einfluss, vorzugsweise ein Einfluss der Fahrzeugkarosserie des Fahrzeuges auf die Übertragung, und/oder ein (insbesondere auch rein / ausschließlich) aktiver Einfluss, z. B. ein aktiv ausgesendetes Signal und/oder aktiv ausgesendete Funkwellen. Bevorzugt ist der Fahrzeugeinfluss ein derartiger Einfluss, welcher die Übertragung bei der Kommunikation beeinträchtigt und/oder modifiziert. Insbesondere beeinflusst damit der Fahrzeugeinfluss mindestens eine Übertragungsbedingung, d. h. der Fahrzeugeinfluss bildet einen (physikalischen) Einfluss auf ein Kommunikationssignal, z. B. Funksignal, der Kommunikation. Bspw. ist die Kommunikation abhängig von Übertragungsbedingungen, wie z. B. dem physikalischen Einfluss der Umgebung und des Übertragungsmediums auf die Kommunikation, z. B. durch Absorption oder Abschwächung des Kommunikationssignals oder Beeinträchtigung des Signalwegs. Der Fahrzeugeinfluss bestimmt und/oder beeinflusst dabei die Übertragungsbedingungen derart, dass der Fahrzeugeinfluss eine Änderung, Absorption und/oder Abschwächung des Kommunikationssignals bewirkt. Das Kommunikationssignal ist dabei bspw. ein Mobilfunksignal und/oder ein GPS-Signal und/oder ein NFC-Signal und/oder ein WLAN (wireless local area network) -Signal und/oder ein HF (high frequency) -Signal und oder ein LF(low frequency) -Signal und/oder ein UWB (Ultrabreitband)-Signal. Die Kommunikation ist somit z. B. eine wechselseitige oder auch nur eine einseitige Übertragung von Informationen, z. B. auch mittels GPS.

Es ist ferner denkbar, dass zur Lokalisation neben der Auswertung des Auswertungssignals noch eine Zusatzauswertung erfolgt. Die Zusatzauswertung umfasst bspw. die Auswertung eines GPS-Signals und/oder die Auswertung einer Cell-ID (Mobilfunkzellenidentifikation) und/oder die Auswertung einer Signalstärke eines weiteren Kommunikationssignals, mit welchem das Fahrzeug mit dem Kommunikationsgerät kommuniziert, z. B. Bluetooth, und/oder die Auswertung mindestens mittels eines Sensors des Fahrzeugs. Als Sensor kann bspw. zumindest ein Näherungssensor des Fahrzeugs und/oder zumindest ein (bspw. Schalt-) Sensor des Fahrzeugs, z. B. ein (Fahrer-) Sitzsensor und/oder ein Türkontaktsensor eines Türgriffs, und/oder ein Gaspedalsensor und/oder ein Bremspedalsensor und/oder zumindest ein Kamerasensor des Fahrzeugs und/oder dergleichen vorgesehen sein. Weiter kann insbesondere auch ein Sensor eines Gurtstraffers und/oder ein Sensor an oder in einem Fahrzeugsitz zur Erkennung einer Gewichtsbelastung und/oder ein Schlafsensor (Müdigkeitssensor), insbesondere im Bereich einer Instrumententafel des Fahrzeugs, und/oder ein optischer Sensor und/oder ein akustischer Sensor und/oder dergleichen zum Einsatz kommen, um die Lokalisation zusätzlich zur Auswertung des Auswertungssignals durchzuführen und/oder zu unterstützen.

Optional kann es möglich sein, dass die Überwachung gemäß Schritt a) und/oder die Detektion und/oder Auswertung des Auswertungssignals gemäß Schritt b) getriggert wird, insbesondere durch einen Empfang eines Auslösungssignals, insbesondere eines Sensors oder dergleichen des Fahrzeuges. Insbesondere kann das Auslösungssignal durch das Fahrzeug generiert werden, und z. B. an das Kommunikationsgerät so übertragen werden, dass es durch das Kommunikationsgerät empfangen wird. Bspw. erfolgt das Triggern und/oder die Generierung des Auslösungssignals, wenn zumindest eines der folgenden Ereignisse, insbesondere Auslösungsereignisse, eintritt:
- Betätigen und/oder Auslösen eines Näherungssensors oder dergleichen des Fahrzeuges,
- Betätigen und/oder Auslösen eines (bestimmten, z. B. Fahrersitz) Sitzsensors und/oder Türkontakts des Fahrzeuges,
- Betätigen und/oder Auslösen eines Bremspedals und/oder Gaspedals bei dem Fahrzeug,
- Betätigen eines Motorstartbetätigungsmittels, insbesondere Motorstarttasters.

Vorzugsweise erfolgt die Auswertung des Auswertungssignals durch das Fahrzeug und/oder durch das Kommunikationsgerät, wobei hierzu insbesondere ein zeitlicher Verlauf des Auswertungssignals gespeichert und/oder zwischengespeichert wird. Hierzu umfasst das Kommunikationsgerät und/oder das Fahrzeug zumindest eine Datenspeichereinheit bzw. einen Datenspeicher, insbesondere einen Ringpuffer, vorzugsweise zur persistenten oder zur flüchtigen Speicherung des Verlaufs des Auswertungssignals. Die Speicherung bzw. Zwischenspeicherung des Auswertungssignals erfolgt vorzugsweise derart, dass ein zeitlicher Verlauf des Auswertungssignals verfügbar ist (insbesondere zur Auswertung verfügbar ist). Bevorzugt wird dabei das Auswertungssignal über eine bestimmte Zeitdauer aufgezeichnet und/oder gemäß einer Ringspeichertechnik derart aufgezeichnet, dass das Auswertungssignal kontinuierlich in einem gewissen Zeitraum gespeichert wird und nach dem Ablaufen einer vorgegebenen Zeit wieder überschrieben wird. Dies hat den Vorteil, dass jederzeit ein gewisser Zeitabschnitt, insbesondere zusammenhängender Zeitabschnitt, des Verlaufs des Auswertungssignals zur Auswertung und/oder zur Lokalisation verfügbar ist. Insbesondere ist es denkbar, dass das Auswertungssignal bzw. der Verlauf des Auswertungssignals als Zeitreihe erfasst wird und/oder zeitreihenmäßig ausgewertet wird, sodass insbesondere ein vergangener Verlauf des Auswertungssignals mitberücksichtigt werden kann. Insbesondere ist es hierzu denkbar, dass das Kommunikationsgerät stets einen gewissen Zeitraum des Auswertungssignals zwischenspeichert, insbesondere unabhängig davon, ob eine Überwachung der Kommunikation durch das Fahrzeug erfolgt. So kann bspw. die Überwachung gemäß Schritt a) erst dann initiiert werden, wenn ein bestimmtes Auslösungsereignis aufgetreten ist und/oder detektiert wird, z. B. wenn ein Sensor eines Fahrzeugsitzes die Belastung des Sitzes feststellt und/oder wenn eine Annäherung an ein Motorstartbetätigungsmittel oder Betätigung eines Motorstartbetätigungsmittels, insbesondere Start-Stopp-Schalters und/oder Start-Stopp-Tasters, erfolgt. Da zu diesem Zeitpunkt der Eintritt des Fahrzeugeinflusses bspw. in der Vergangenheit liegt, ist es von Vorteil, wenn bereits zu diesem Zeitpunkt auf einen zeitlichen Verlauf des Auswertungssignals für die Auswertung gemäß Schritt b) zugegriffen werden kann. Hierzu kann bspw. durch das Fahrzeug und/oder durch das Kommunikationsgerät, z. B. unabhängig von der Initiierung der Überwachung gemäß Schritt a) und/oder stets, das Auswertungssignal für einen bestimmten Zeitraum zwischengespeichert werden.

Optional kann es möglich sein, dass neben einem passiven Einfluss (insbesondere dem Fahrzeugeinfluss als ein passiver Fahrzeugeinfluss), z. B. einer Fahrzeugkarosserie oder dergleichen, der Fahrzeugeinfluss (und/oder noch ein weiterer Fahrzeugeinfluss), z. B. ein aktiver Fahrzeugeinfluss, z. B. durch ein störendes Signal, vorgesehen ist. Der aktive Fahrzeugeinfluss kann bspw. durch das Aussenden eines Funksignals erzielt werden, welches wie der passive Fahrzeugeinfluss die Übertragung bei der Kommunikation beeinträchtigt und/oder verändert. Hierdurch kann die Zuverlässigkeit der Lokalisation weiter verbessert werden.

Vorteilhafterweise kann es weiter vorgesehen sein, dass das Auswertungssignal, insbesondere als Mobilfunkkommunikationsrohdaten, und/oder ein Ergebnis der Auswertung über eine weitere Kommunikation (Fahrzeug-Kommunikation) von dem mobilen Kommunikationsgerät an das Fahrzeug übertragen wird. Die weitere Kommunikation ist bspw. eine Bluetooth-Kommunikation, insbesondere Bluetooth-Low Energy Kommunikation, und/oder NFC-Kommunikation und/oder eine Mobilfunkkommunikation und/oder dergleichen. Insbesondere unterscheidet sich die Kommunikationsart und/oder die Kommunikationsteilnehmer der weiteren Kommunikation von der gemäß Schritt a) überwachten Kommunikation.

Bevorzugt ist die gemäß Schritt a) überwachte Kommunikation eine Mobilfunk-kommunikation, insbesondere in einem Mobilfunknetz, z. B. GSM (global system for mobile communications) und/oder UMTS (universal mobile telecommunications system) und/oder LTE (long term evolution). Insbesondere handelt es sich bei der Kommunikation um eine derartige Kommunikation, bei welcher die Übertragung durch den Fahrzeugeinfluss veränderbar und/oder beeinträchtigbar ist.

Von weiterem Vorteil kann vorgesehen sein, dass durch das mobile Kommunikationsgerät die Kommunikation als eine Mobilfunk-Kommunikation über ein Mobilfunknetz durchgeführt wird, und vorzugsweise eine Fahrzeug-Kommunikation (als eine weitere Kommunikation) mit dem Fahrzeug durchgeführt wird, welche insbesondere über eine vom Mobilfunk unterschiedliche Kommunikationstechnologie, vorzugsweise über Bluetooth und/oder NFC und/oder WLAN und/oder HF und/oder LF und/oder UWB und/oder GPS, durchgeführt wird, und wobei vorzugsweise sich jeder der Kommunikationsteilnehmer bei der Kommunikation von dem Fahrzeug unterscheidet. Es ist dabei denkbar, dass die gemäß Schritt a) überwachte Kommunikation und/oder eine weitere Kommunikation zwischen dem Kommunikationsgerät und dem Fahrzeug oder zwischen dem Kommunikationsgerät und einem vom Fahrzeug unterschiedlichen Kommunikationsteilnehmer durchgeführt wird. Die gemäß Schritt a) überwachte Kommunikation kann sich vorzugsweise von der weiteren Kommunikation unterscheiden, insbesondere in Bezug auf die verwendete Kommunikationstechnologie (z. B. WLAN oder Bluetooth) und/oder in Bezug auf die Kommunikationsteilnehmer. Mit anderen Worten muss die Kommunikation des Kommunikationsgeräts, insbesondere die Kommunikation, welche überwacht wird und zur Lokalisation dient, nicht zwangsläufig mit dem Fahrzeug durchgeführt werden. Dies hat den Vorteil, dass das erfindungsgemäße Verfahren vielseitig eingesetzt werden kann.

Ferner ist es denkbar, dass durch das mobile Kommunikationsgerät die Kommunikation als eine Fahrzeug-Kommunikation mit dem Fahrzeug, vorzugsweise über Bluetooth und/oder NFC und/oder Mobilfunk und/oder WLAN und/oder HF und/oder LF und/oder UWB und/oder GPS, durchgeführt wird, wobei vorzugsweise durch das mobile Kommunikationsgerät eine weitere Kommunikation über eine weitere Kommunikationstechnologie durchgeführt wird. Die weitere Kommunikationstechnologie ist bspw. Bluetooth (insbesondere Bluetooth Low Energy) und/oder NFC und/oder Mobilfunk und/oder WLAN und/oder HF und/oder LF und/oder UWB und/oder GPS. Dies hat den Vorteil, dass bspw. das Auswertungssignal und/oder ein Ergebnis der Auswertung über die überwachte Kommunikation und/oder über die weitere Kommunikation übertragen werden können.

Es kann vorgesehen sein, dass das Auswertungssignal, insbesondere als Mobilfunkrohdaten, und/oder ein Verlauf des Auswertungssignals und/oder ein Ergebnis der Auswertung gemäß Schritt b) und/oder ein Teilergebnis der Auswertung von dem Kommunikationsgerät über die Kommunikation, insbesondere die gemäß Schritt a) überwachte Kommunikation und/oder eine weitere Kommunikation, an das Fahrzeug übertragen wird. Dies hat den Vorteil, dass das Kommunikationsgerät bspw. unabhängig von dem Fahrzeug das Auswertungssignal erfassen und/oder speichern kann, um es rechtzeitig zur Lokalisation dem Fahrzeug zur Verfügung zu stellen.

Gemäß einer vorteilhaften Weiterbildung der Erfindung kann vorgesehen sein, dass neben der Kommunikation als Primärkommunikation gemäß Schritt a) bei einer weiteren Kommunikation, insbesondere einer Fahrzeug-Kommunikation, die Überwachung durchgeführt wird, sodass das Auswertungssignal für die weitere Kommunikation spezifisch ist, wenn die Überwachung der Primärkommunikation gemäß Schritt a) erfolglos ist, insbesondere bei zu niedriger Signalstärke, insbesondere eines Kommunikationssignals, bei der Primärkommunikation. Auch kann es vorgesehen sein, dass die Fahrzeug-Kommunikation nicht nur alternativ, sondern gleichzeitig zur Primärkommunikation überwacht wird, um die Lokalisation anhand beider Kommunikation durchzuführen und somit zu verbessern. Dies hat den Vorteil, dass die Zuverlässigkeit der Lokalisation erhöht werden kann, insbesondere wenn die Auswertung z. B. bei mangelnder Signalstärke, insbesondere eines Kommunikationssignals bei der Primärkommunikation, erschwert ist.

Des Weiteren ist es im Rahmen der Erfindung optional möglich, dass eine Ortung des Kommunikationsgerätes durch ein Ortungssystem, insbesondere GPS oder dergleichen, erfolgt, insbesondere zur Verbesserung der Genauigkeit der Lokalisation gemäß Schritt b). Insbesondere wird durch diese (GPS-) Ortung die Lokalisation unterstützt, indem bspw. das Ergebnis der (GPS-) Ortung mit dem Ergebnis der Lokalisation gemäß Schritt b) verglichen wird. Dies hat den Vorteil, dass die Genauigkeit der Lokalisation erhöht werden kann.

Die Lokalisation kann bspw. die nachfolgenden Schritte umfassen, welche nacheinander oder in beliebiger Reihenfolge durchgeführt werden können:
- Ermitteln einer ersten Ortungsinformation, insbesondere anhand eines GPS-Signals, wobei die erste Ortungsinformation für einen Ort des Fahrzeuges spezifisch ist,
- Ermitteln einer zweiten Ortungsinformation, insbesondere anhand des oder eines weiteren GPS-Signals, wobei die zweite Ortungsinformation für einen Ort des Kommunikationsgerätes spezifisch ist,
- Vergleichen der ersten Ortungsinformation mit der zweiten Ortungsinformation, sodass vorzugsweise die Übereinstimmung und/oder der Unterschied und/oder der Abstand zwischen dem Ort des Fahrzeuges und dem Ort des Kommunikationsgeräts ermittelt wird.

Insbesondere kann es vorgesehen sein, dass die Funktion des Fahrzeuges gemäß Schritt c) nur dann aktiviert wird, wenn der Ort des Fahrzeuges mit dem Ort des Kommunikationsgeräts übereinstimmt. Des Weiteren kann es möglich sein, dass die Funktion oder eine weitere Funktion auch dann aktiviert wird, wenn der Abstand einen Minimalabstand überschreitet oder unterschreitet.

Vorteilhafterweise kann im Rahmen der Erfindung vorgesehen sein, dass anhand der Detektion des Fahrzeugeinflusses gemäß Schritt b) festgestellt wird, wenn sich das Kommunikationsgerät im Fahrzeug-Innenraum befindet und/oder dahin bewegt wird. Bevorzugt wird (insbesondere nur) dann gemäß Schritt c) die Aktivierung der Funktion des Fahrzeuges durchgeführt, wenn anhand der Detektion des Fahrzeugeinflusses gemäß Schritt b) festgestellt wird, dass sich das Kommunikationsgerät im Fahrzeug-Innenraum befindet und/oder dahin bewegt wird. Vorzugsweise erfolgt die Lokalisation gemäß Schritt b) derart, dass ein Standort des Kommunikationsgerätes im Fahrzeug-Innenraum von zumindest einem weiteren Standort des Kommunikationsgerätes außerhalb des Fahrzeuges unterschieden wird. Auch ist es denkbar, dass unterschiedliche Bereiche im Fahrzeuginnenraum durch die Lokalisation unterschieden werden können. Hierzu erfolgt die Auswertung gemäß Schritt b) bspw. derart, dass die unterschiedlichen Fahrzeugeinflüsse aufgrund der unterschiedlichen Geometrie der Fahrzeugkarosserie für unterschiedliche Bereiche im Fahrzeuginnenraum ausgewertet und/oder unterschieden werden können. Bspw. wird die Freigabe des Motorstarts als eine erste Funktion (bzw. als eine zweite Funktion) nur dann aktiviert, wenn das Kommunikationsgerät im Bereich des Fahrersitzes lokalisiert wird. Hierdurch kann auch die Sicherheit bei dem Betrieb des Fahrzeugs erhöht werden.

Es kann auch möglich sein, dass anhand der Detektion des Fahrzeugeinflusses gemäß Schritt b) festgestellt wird, wenn sich das Kommunikationsgerät im Fahrzeug-Außenraum befindet und/oder (insbesondere vom Innenraum des Fahrzeuges) dahin bewegt wird. Bevorzugt erfolgt (insbesondere nur) dann gemäß Schritt c) die Aktivierung der Funktion oder einer weiteren Funktion des Fahrzeuges, wenn anhand der Detektion des Fahrzeugeinflusses gemäß Schritt b) festgestellt wird, dass sich das Kommunikationsgerät außerhalb des Fahrzeuges befindet und/oder (vom Fahrzeuginnenraum aus) dahin bewegt wird. Vorzugsweise erfolgt die Lokalisation gemäß Schritt b) derart, dass ein Standort des Kommunikationsgerätes im Fahrzeug-Außenraum von zumindest einem weiteren Standort des Kommunikationsgerätes innerhalb des Fahrzeuges unterschieden wird. Bevorzugt ist dabei die weitere Funktion eine Verriegelung des Fahrzeuges und/oder die Aktivierung einer Diebstahlsicherung oder dergleichen. Bevorzugt kann zusätzlich oder alternativ die weitere Funktion (spätestens) dann aktiviert werden, wenn ein Kommunikationssignal und/oder ein Verbindungssignal zwischen dem Fahrzeug und dem Kommunikationsgerät abbricht und/oder unterhalb einer vordefinierten Schwelle abgeschwächt wird.

Des Weiteren ist es denkbar, dass gemäß Schritt b) ein erster Fahrzeugeinfluss detektiert wird, welcher für einen Ort innerhalb des Fahrzeuges oder ein Einbringen des Kommunikationsgerätes in einen Fahrzeug-Innenraum spezifisch ist, und vorzugsweise ein zweiter Fahrzeugeinfluss detektiert wird, welcher für einen Ort außerhalb des Fahrzeuges oder ein Einbringen des Kommunikationsgerätes in einen Fahrzeug-Außenraum (bzw. außerhalb des Fahrzeug-Innenraums) spezifisch ist. Bevorzugt wird in Abhängigkeit von der Detektion des ersten Fahrzeugeinflusses eine erste Funktion aktiviert (z. B. eine Motorstartfreigabe) und bevorzugt in Abhängigkeit von der Detektion des zweiten Fahrzeugeinflusses eine zweite Funktion aktiviert (z. B. eine Verriegelung der Türen des Fahrzeuges). Somit kann auch das Entfernen vom Fahrzeug zuverlässig detektiert werden.

Vorzugsweise kann vorgesehen sein, dass bei der Auswertung des Auswertungssignals gemäß Schritt b) ein Ausmaß des Fahrzeugeinflusses auf die Kommunikation, insbesondere Mobilfunk-Kommunikation, insbesondere die Übertragung bei der (Mobilfunk-) Kommunikation, bestimmt wird, und die Lokalisation des Kommunikationsgerätes gemäß Schritt b) dadurch erfolgt, dass das Kommunikationsgerät im Fahrzeug-Innenraum geortet wird, wenn das Ausmaß und/oder das Auswertungssignal für die Ortung im Fahrzeug-Innenraum spezifisch ist, vorzugsweise wenn das Ausmaß eine Grenze übersteigt und/oder das Auswertungssignal ein bestimmtes Muster aufweist. Das Muster kann bspw. ein Frequenzmuster und/oder ein zeitliches Muster im Verlauf des Auswertungssignals sein. Bspw. wird hierzu bei der Auswertung gemäß Schritt b) eine statistische Analyse und/oder eine Zeitreihenanalyse des Auswertungssignals durchgeführt.

Optional ist es denkbar, dass das Überwachen der, insbesondere Mobilfunk-, Kommunikation durch das Fahrzeug getriggert wird, vorzugsweise bei einer Betätigung von mindestens einem Sensor des Fahrzeuges und/oder bei Empfang eines Auslösungssignals und/oder bei Eintreten eines Auslösungsereignisses. Der Sensor kann bspw. im Fahrzeuginnenraum angeordnet sein, vorzugsweise in oder an einem Fahrersitz des Fahrzeugs. Weiter kann der Sensor bspw. als ein Motorstartbetätigungsmittel, insbesondere eine Start-Stopp-Taster, des Fahrzeugs ausgeführt sein. Auch ist es denkbar, dass der Sensor als ein Näherungssensor, z. B. im Bereich des Motorstartbetätigungsmittels, angeordnet ist. Auch ist es denkbar, dass der Sensor ein Türsensor ist, sodass bspw. beim oder nach dem Schließen einiger oder sämtlicher Türen des Fahrzeuges die Triggerung erfolgt. Insbesondere liegt erst beim Schließen sämtlicher Türen des Fahrzeuges der passive Einfluss bzw. Fahrzeugeinfluss vor. Es kann möglich sein, dass der Fahrzeugeinfluss und/oder die Aktivierung der Funktion nur dann erfolgt, wenn zuvor die Betätigung des Sensors positiv erfolgt ist und/oder eine Authentifizierung mit dem Kommunikationsgerät erfolgt ist. Die Betätigung ist dabei insbesondere als eine positive Erfassung und/oder Erkennung einer Aktivierungshandlung und/oder dergleichen zu verstehen, wobei der Sensor bspw. als ein kapazitiver Sensor und/oder als ein Schalter oder dergleichen ausgeführt sein kann. Dies hat den Vorteil, dass nicht dauerhaft die Überwachung erfolgen muss, und somit ein Energieverbrauch reduziert werden kann.

Unter "Überwachen" wird insbesondere die Ermittlung des Auswertungssignals verstanden, und alternativ oder zusätzlich auch eine Erfassung und/oder Auswertung und/oder (Zwischen-)Speicherung eines Kommunikationssignals verstanden, insbesondere von durch die Kommunikation übertragenen Daten und/oder einer Signalstärke.

Von weiterem Vorteil kann vorgesehen sein, dass der detektierte Fahrzeugeinfluss für einen Störeinfluss auf die, insbesondere Mobilfunk-, Kommunikation spezifisch ist, welcher durch die Karosserie des Fahrzeuges verursacht wird, und sich insbesondere nur dann signifikant auf die, insbesondere Mobilfunk-, Kommunikation des Kommunikationsgerätes auswirkt, wenn sich das Kommunikationsgerät im Fahrzeug-Innenraum befindet. Dabei kann es insbesondere vorgesehen sein, dass sich der Fahrzeugeinfluss und/oder der Sperreinfluss nur dann signifikant auf die Kommunikation auswirkt, d. h. detektiert werden kann, wenn sämtliche Türen des Fahrzeugs geschlossen sind. Hierdurch wird gewährleistet, dass das Fahrzeug betriebsbereit ist, wenn die Funktion aufgrund der Detektion aktiviert wird.

Außerdem kann es im Rahmen der Erfindung von Vorteil sein, dass bei der Auswertung gemäß Schritt b) zur Detektion des Fahrzeugeinflusses ein Signalsprung des Auswertungssignals detektiert wird, insbesondere bei einem Signalstärke-Verlauf. Insbesondere entspricht dabei das Auswertungssignal dem Signalstärkeverlauf oder es lässt sich der Signalstärkeverlauf anhand des Auswertungssignals ermitteln. Der Signalsprung ist bspw. dadurch gekennzeichnet, dass eine überdurchschnittlich hohe (z. B. negative) Steigung des Verlaufs des Auswertungssignals (bzw. Signalstärke-Verlaufs) ermittelt wird. Somit kann zuverlässig der Fahrzeugeinfluss von anderen Einflüssen auf die Kommunikation unterschieden werden. Insbesondere ist es denkbar, dass der Signalsprung, z. B. als Muster, mit einer Vorgabe verglichen wird, und/oder der Fahrzeugeinfluss nur dann (positiv) detektiert wird, wenn die Eigenschaften des Signalsprungs (wie Dauer und Ausmaß) der Vorgabe genügen. Hierzu ist die Vorlage bspw. in einem Datenspeicher bzw. einer Datenspeichereinheit, wie einem Flashspeicher, gespeichert. Insbesondere wird die Vorlage in Abhängigkeit von der Kommunikation, insbesondere einer Kommunikationsart (Kommunikationstechnologie), von dem Kommunikationsgerät und/oder von dem Fahrzeug bestimmt, da ggf. unterschiedliche Signalsprünge bei unterschiedlichen Kommunikationsarten oder unterschiedlicher Hardware des Kommunikationsgeräts auftreten. Insbesondere ist es denkbar, dass die Vorgabe durch das Kommunikationsgerät, insbesondere einer Software des Kommunikationsgeräts, vorgegeben und/oder generiert wird, und z. B. durch eine weitere Kommunikation (Fahrzeug-Kommunikation) an das Fahrzeug übertragen wird.

In einer weiteren Möglichkeit kann vorgesehen sein, dass das Auswertungssignal in Abhängigkeit von einem Mobilfunksignal der Mobilfunk-Kommunikation ermittelt wird, insbesondere (bspw. ausschließlich) in Abhängigkeit von der Signalstärke des Mobilfunksignals, wobei vorzugsweise das Mobilfunksignal als ein GSM- oder UMTS- oder LTE-Signal ausgeführt ist. Damit das Auswertungssignal und/oder das Mobilfunksignal durch das Fahrzeug ausgewertet werden kann, kann es vorgesehen sein, dass das Auswertungssignal und/oder das Mobilfunksignal und/oder ein Ergebnis der Auswertung von dem Kommunikationsgerät an das Fahrzeug übertragen wird, z. B. über eine weitere Kommunikation, welche sich insbesondere von der gemäß Schritt a) überwachten Kommunikation unterscheidet. Dies hat den Vorteil, dass das Fahrzeug die Mobilfunkkommunikation des Kommunikationsgeräts als bestehende Kommunikation nutzen kann, um eine Lokalisierung durchzuführen. Weiter ist ein Vorteil, dass das Mobilfunkgerät einen separaten ID-Geber ersetzen kann, um in sicherer und komfortabler Weise die Authentifizierung durchzuführen. Hierzu wird bspw. die Authentifizierung, insbesondere die Übertragung eines Codes, durch die weitere Kommunikation durchgeführt. Bevorzugt ist die (erste) Kommunikation eine Kommunikation, welche durch das Fahrzeug ausschließlich aufgrund des Fahrzeug-Einflusses, insbesondere durch die Fahrzeugkarosserie, beeinflusst werden kann. Insbesondere ist die (erste) Kommunikation und/oder die überwachte Kommunikation und/oder die Primärkommunikation eine solche Kommunikation, welche durch das Fahrzeug inhaltlich nicht beeinflussbar ist.

Es kann optional möglich sein, dass gemäß Schritt b) ein zeitlicher Verlauf des Auswertungssignals ausgewertet wird, wobei insbesondere die Auswertung durch eine Zeitreihenanalyse erfolgt. Insbesondere ist es denkbar, dass bei der Auswertung eine statistische Analyse des Auswertungssignals erfolgt, wobei hierzu insbesondere ein zeitlicher Verlauf des Auswertungssignals ausgewertet wird, wobei vorzugsweise zur Ermittlung des Verlaufs das Auswertungssignal und/oder ein Kommunikationssignal, insbesondere ein Mobilfunksignal, der Kommunikation über einen Zeitraum von mindestens 100 ms oder mindestens 500 ms oder mindestens 1 s oder mindestens 10 s oder mindestens 100 s aufgezeichnet wird. Dies kann die Zuverlässigkeit der Auswertung deutlich erhöhen.

Weiter ist im Rahmen der Erfindung denkbar, dass gemäß Schritt b) ein Signalsprung und/oder Muster in einem zeitlichen Verlauf des Auswertungssignals detektiert wird, welcher für ein Einbringen des Kommunikationsgerätes vom Außenraum des Fahrzeuges in den Fahrzeug-Innenraum (und/oder ein Schließen sämtlicher Türen des Fahrzeuges) spezifisch ist, wobei der Signalsprung vorzugsweise als ein statistisches Muster im Auswertungssignal, vorzugsweise in einem Amplituden- und/oder Phasen- und/oder Frequenzverlauf des Auswertungssignals, ausgewertet wird. Entsprechend kann es möglich sein, dass das Auswertungssignal eine Amplituden- und/oder eine Phasen- und/oder eine Frequenzinformation umfasst. Insbesondere kann zur Auswertung gemäß Schritt b) eine Mustererkennung durchgeführt werden. Dabei ist es denkbar, dass die Auswertung zumindest teilweise durch eine Elektronik des Fahrzeugs, insbesondere eine zentrale Fahrzeugelektronik und/oder eine Verarbeitungseinheit des Fahrzeugs, durchgeführt wird. Hierdurch kann eine ausreichend schnelle Verarbeitung zur Auswertung gewährleistet werden. Insbesondere umfasst die Verarbeitungseinheit und/oder eine Auswerteeinheit des Kommunikationsgeräts und/oder die Elektronik des Fahrzeuges elektronische Komponenten, insbesondere einen Mikroprozessor und/oder einen digitalen Signalprozessor und/oder einen Flash-Speicher und/oder eine integrierte Schaltung, vorzugsweise eine anwendungsspezifische integrierte Schaltung (ASIC).

Nach einer weiteren Möglichkeit kann vorgesehen sein, dass gemäß Schritt b) der Fahrzeugeinfluss ein Einfluss auf die Übertragung ist, welcher durch das Fahrzeug, vorzugsweise durch die Fahrzeugkarosserie, bewirkt wird, und insbesondere eine Dämpfung eines, insbesondere Mobilfunk-, Kommunikationssignals der, insbesondere Mobilfunk-, Kommunikation umfasst bzw. bewirkt, welche besonders bevorzugt durch eine Stufe im zeitlichen Amplitudenverlauf, insbesondere im Signalstärkeverlauf, des bzw. bei dem Auswertungssignal(s) detektiert wird. Damit ist eine sichere und einfache Lokalisation möglich.

Ein weiterer Vorteil kann im Rahmen der Erfindung erzielt werden, wenn gemäß Schritt b) der Fahrzeugeinfluss ein Einfluss auf die Übertragung ist, welcher eine Veränderung eines, insbesondere durch das Kommunikationsgerät und/oder Fahrzeug empfangenen, Kommunikationssignals der Kommunikation bewirkt, insbesondere eine Frequenzveränderung und/oder eine Amplitudenveränderung und/oder eine Phasenveränderung bei dem Kommunikationssignal, wobei bevorzugt ein Muster im Auswertungssignal (bei der Auswertung) detektiert wird, welches für die Veränderung spezifisch ist. Alternativ oder zusätzlich ist es denkbar, dass anhand des Auswertungssignals und/oder anhand des Musters neben der Lokalisation auch eine weiterführende Information detektierbar ist. Diese weiterführende Information ist bspw. eine Richtung der Bewegung des Kommunikationsgeräts und/oder eine Aktivität des Bedieners des Fahrzeugs, welcher das Kommunikationsgerät mit sich führt. Damit ist eine umfassende Auswertung zur Verbesserung der Sicherheit beim Betrieb des Fahrzeugs möglich.

Ein weiterer Vorteil im Rahmen der Erfindung ist erzielbar, wenn der Fahrzeugeinfluss anhand eines Abschwächungsausmaßes und/oder anhand einer Abschwächungsdauer einer Empfangspegelabschwächung detektiert wird, welche am Auswertungssignal ermittelt wird, wobei insbesondere das Kommunikationsgerät dann im Fahrzeug-Innenraum lokalisiert wird,
- wenn die Abschwächungsdauer mindestens 0,1 s oder mindestens 1 s oder mindestens 3 s oder mindestens 5 s beträgt, und/oder
- wenn das Abschwächungsausmaß mindestens 1 dBm oder mindestens 5 dBm oder mindestens 10 dBm oder mindestens 15 dBm oder mindestens 30 dBm oder mindestens 50 dBm beträgt.

Die Abschwächungsdauer und/oder das Abschwächungsausmaß können dabei bspw. anhand des Signalsprungs beim Auswertungssignal ermittelt werden. Das Abschwächungsausmaß ist dabei bspw. die Differenz des Leistungspegels (Signalstärke) vor dem Sprung (Signalsprung) und nach dem Sprung, und/oder die maximale Differenz des Leistungspegels innerhalb einer bestimmten Zeitdauer, z. B. innerhalb der Abschwächungsdauer. Für die Auswertung kann zuvor bspw. noch eine Filterung des Auswertungssignals erfolgen, z. B. eine Mittelung und/oder ein gleitender Mittelwert berechnet werden. Die Abschwächungsdauer ist bspw. die Dauer (Länge) der Stufe, welche ausgewertet wird. Die Auswertung erfolgt bspw. anhand des RSSI (receive signal strength indicator). Die Einheit "dBm", d. h. Dezibel Milliwatt, ist dabei insbesondere die Einheit des Leistungspegels, welcher das Verhältnis einer Leistung im Vergleich zur Bezugsleistung von 1 Milliwatt beschreibt.

Ferner ist es denkbar, dass das Auswertungssignal aus den Rohdaten des Kommunikationsgerätes und/oder aus den Mobilfunkdaten des Kommunikationsgerätes (d. h. ermittelt durch das Kommunikationsgerät), vorzugsweise durch eine Smartphone-Software (App), ermittelt wird, insbesondere anhand mindestens eines RSSI-Wertes. Das Kommunikationsgerät weist dabei bspw. eine Software auf, vorzugsweise eine Smartphone-App, durch welche die Aufzeichnung des Auswertungssignals und/oder die Übertragung des Auswertungssignals an das Fahrzeug und/oder die Auswertung gemäß Schritt b) und/oder eine weitere Kommunikationsgerätefunktion durchgeführt werden kann. Die weitere Kommunikationsgerätefunktion ist bspw. eine ID-Geber-Funktion, z. B. eine Authentifizierung am Fahrzeug. Hierzu kann bspw. eine weitere Kommunikation (Fahrzeug-Kommunikation), z. B. eine Bluetooth-Kommunikation und/oder eine Funkkommunikation, mit dem Fahrzeug genutzt werden. Dadurch wird die Sicherheit und der Komfort bei der Authentifizierung sowie bei der Lokalisierung stark verbessert.

Vorteilhaft ist es zudem, wenn der Fahrzeugeinfluss anhand eines Abschwächungsausmaßes im Auswertungssignal detektiert wird, wobei das Auswertungssignal vorzugsweise für einen Signal-Rauschabstand spezifisch ist, und vorzugsweise das Kommunikationsgerät dann im Fahrzeug-Innenraum lokalisiert wird, wenn das Abschwächungsausmaß mindestens 5 dB (Dezibel) oder mindestens 10 dB oder mindestens 20 dB oder mindestens 30 dB oder mindestens 40 dB oder mindestens 50 dB beträgt. Damit ist eine zuverlässige Lokalisierung möglich. Der Signal-Rauschabstand ist dabei insbesondere entscheidend für eine Signalqualität und/oder eine Empfangsstärke bei dem Kommunikationsgerät, insbesondere bei einer Mobilfunkkommunikation. Insbesondere kann es auch vorgesehen sein, dass das Abschwächungsausmaß parametrisierbar ausgeführt ist und somit z. B. eine Anpassung an verschiedene Kommunikationsgeräte ermöglicht. Insbesondere ist es denkbar, dass das Kommunikationsgerät, z. B. eine Software des Kommunikationsgeräts, eine Parametrisierung der Auswertung und/oder der Überwachung (gemäß Schritt a)) durchführt. Damit kann das erfindungsgemäße Verfahren mit unterschiedlichen Kommunikationsgeräten, welche unterschiedliche Empfangseigenschaften haben, verwendet werden.

In einer weiteren Möglichkeit kann vorgesehen sein, dass die Kommunikation als eine Mobilfunk-Kommunikation eine Kommunikation zwischen dem Kommunikationsgerät und einer Basisstation des Mobilfunknetzes ist, wobei bevorzugt das Auswertungssignal für eine Qualität und/oder eine Empfangsstärke bei der Kommunikation spezifisch ist. Damit ist eine zuverlässige und sichere Lokalisation möglich.

Weiter ist im Rahmen der Erfindung denkbar, dass die Übertragung bei der, insbesondere Mobilfunk-, Kommunikation, insbesondere eines Kommunikationssignals, vorzugsweise Mobilfunksignals und/oder Satellitensignals, in Abhängigkeit von mindestens einer Übertragungsbedingung erfolgt, wobei die Übertragungsbedingung mindestens einen Einflussfaktor auf die Ausbreitung von Funkwellen, bevorzugt Mobilfunkwellen, umfasst, insbesondere eine elektrische Abschirmung und/oder eine Dämpfung durch eine Karosserie des Fahrzeuges, welche eine Signalveränderung, insbesondere Signalabschwächung, des Mobilfunksignals bewirkt, welche anhand des Auswertungssignals detektiert wird. Insbesondere kann dabei die Fahrzeugkarosserie derart ausgestaltet sein, dass ein detektierbarer Fahrzeugeinfluss auf die Übertragung durch die Fahrzeugkarosserie bewirkt wird. Damit wird eine zuverlässige Lokalisierung gewährleistet.

Nach einer weiteren Möglichkeit kann vorgesehen sein, dass gemäß Schritt b) die Auswertung des Auswertungssignals durch eine Signalverlaufsanalyse und/oder eine Mustererkennung erfolgt, sodass der Fahrzeugeinfluss detektiert wird, wobei bevorzugt eine statistische Mustererkennung zum Einsatz kommt. Auch ist es denkbar, dass zunächst eine Teilauswertung durch das Kommunikationsgerät durchgeführt wird und anschließend eine weitere Teilauswertung durch das Fahrzeug durchgeführt wird. Dies ermöglicht eine aussagekräftige und zuverlässige Auswertung gemäß Schritt b).

Es kann im Rahmen der Erfindung vorgesehen sein, dass gemäß Schritt b) die Auswertung des Auswertungssignals durch das Kommunikationsgerät, vorzugsweise durch eine Auswerteeinheit des Kommunikationsgerätes, erfolgt, und ein Ergebnis der Auswertung und/oder der Detektion anschließend über eine Fahrzeug-Kommunikation, vorzugsweise eine Bluetooth- und/oder Bluetooth-Low-Energy-Kommunikation, an das Fahrzeug übertragen wird. Insbesondere ist es dabei denkbar, dass die Übertragung an das Fahrzeug verschlüsselt erfolgt, um die Sicherheit beim Betrieb des Fahrzeugs zu erhöhen.

Ferner kann im Rahmen der Erfindung vorgesehen sein, dass gemäß Schritt b) die Auswertung des Auswertungssignals durch eine Verarbeitungseinheit des Fahrzeuges durchgeführt wird, wobei vorzugsweise das Auswertungssignal über eine Fahrzeug-Kommunikation von dem Kommunikationsgerät an die Verarbeitungseinheit übertragen wird. Damit ist es möglich, die Zuverlässigkeit und Geschwindigkeit bei der Auswertung zu erhöhen und zu gewährleisten.

Beispielsweise kann es vorgesehen sein, dass das Überwachen der, insbesondere Mobilfunk-, Kommunikation gemäß Schritt a) nur dann initiiert (insbesondere getriggert) wird, wenn zumindest eines der folgenden (Auslösungs-) Ereignisse durch das Fahrzeug detektiert werden:
- Betätigung eines Sensors an einem Sitz des Fahrzeuges, insbesondere des Fahrersitzes, vorzugsweise eines Sitzkontaktes,
- Betätigung einer Kupplung und/oder eines Bremspedals des Fahrzeuges,
- Annäherung an das Fahrzeug, insbesondere durch einen Annäherungssensor des Fahrzeuges,
- Durchführung einer Aktivierungshandlung an einem Türgriff, insbesondere Türaußengriff, des Fahrzeuges,
- Betätigung eines Tasters, insbesondere eines Start-Stopp-Tasters und/oder Motorstartbetätigungsmittel, und/oder Schalters und/oder einer Eingabevorrichtung im Fahrzeug-Innenraum, insbesondere zum Motorstart,
- Erfassung eines Unterschreitens eines vordefinierten Abstands des Kommunikationsgerätes zum Fahrzeug, vorzugsweise anhand einer Ortung, bevorzugt einer GPS-Ortung und/oder anhand eines Näherungssensors, insbesondere kapazitiven Näherungssensors, wobei insbesondere die GPS-Ortung durch das Kommunikationsgerät erfolgt,
- Auswertung eines Signals einer Fahrzeug-Kommunikation, insbesondere eines Bluetooth-Signals, insbesondere Bluetooth-Low Energy Signals,
- Empfang eines Wecksignals durch das Kommunikationsgerät, wobei das Wecksignal von dem Fahrzeug ausgesendet wird.

Auch ist es denkbar, dass das Überwachen nur dann initiiert wird, wenn eine Kombination und/oder eine bestimmte Abfolge dieser Ereignisse detektiert wird. Hierdurch kann eine sichere und schnelle Detektion des Fahrzeugeinflusses erfolgen.

In einer weiteren Möglichkeit kann vorgesehen sein, dass die Funktion des Fahrzeuges gemäß Schritt c) nur dann aktiviert wird, wenn zuvor eine erfolgreiche Authentifizierung mit dem Kommunikationsgerät erfolgt ist, wobei vorzugsweise in Abhängigkeit von der Authentifizierung eine Sicherheitsfunktion des Fahrzeuges, bevorzugt eine Zentralverriegelung, angesteuert wird. Dabei ist es denkbar, dass das Kommunikationsgerät zur Authentifizierung dient, wobei vorzugsweise ein Code über eine weitere Kommunikation (Fahrzeug-Kommunikation) des Kommunikationsgeräts mit dem Fahrzeug durchgeführt wird. Insbesondere ist es denkbar, dass bei der Initiierung der Überwachung (gemäß Schritt a)) auch die Authentifizierung initiiert wird.

Ebenfalls Gegenstand der Erfindung ist ein System, insbesondere Authentifizierungssystem, zur Aktivierung mindestens einer Funktion eines Fahrzeuges, zumindest aufweisend:
- ein mobiles Kommunikationsgerät zur Kommunikation, insbesondere einer ersten Kommunikation und/oder Mobilfunkkommunikation,
- eine Überwachungsvorrichtung (insbesondere des Fahrzeuges und/oder des Kommunikationsgeräts) zur Überwachung der Kommunikation.

Die Überwachungsvorrichtung kann dabei bspw. auch getrennt voneinander ausgebildete elektronische Komponenten umfassen, z. B. eine Elektronik des Kommunikationsgeräts und/oder des Fahrzeuges. Es ist insbesondere vorgesehen, dass durch die Überwachungsvorrichtung mindestens ein für die Kommunikation spezifisches Auswertungssignal ermittelbar ist, und ein Fahrzeugeinfluss des Fahrzeuges auf die Übertragung bei der Kommunikation anhand einer Auswertung des Auswertungssignals detektierbar ist, um eine Lokalisation des Kommunikationsgerätes, insbesondere in Bezug auf einen Fahrzeug-Innenraum des Fahrzeuges, insbesondere verschiedene Bereiche des Fahrzeug-Innenraums, durchzuführen, sodass die Funktion des Fahrzeuges in Abhängigkeit von der Detektion des Fahrzeugeinflusses aktivierbar ist. Damit bringt das erfindungsgemäße System die gleichen Vorteile mit sich, wie sie ausführlich mit Bezug auf ein erfindungsgemäßes Verfahren beschrieben worden sind. Zudem kann das erfindungsgemäße System geeignet sein, gemäß einem erfindungsgemäßen Verfahren betrieben zu werden.

Vorteilhaft ist es darüber hinaus, wenn im Rahmen der Erfindung das mobile Kommunikationsgerät zur Mobilfunk-Kommunikation über ein Mobilfunknetz über eine erste Kommunikationsschnittstelle (des Kommunikationsgeräts), und zur Fahrzeug-Kommunikation mit dem Fahrzeug über eine zweite Kommunikationsschnittstelle (des Kommunikationsgeräts) ausgeführt ist. Insbesondere weist das Kommunikationsgerät die erste und/oder zweite Kommunikationsschnittstelle auf. Dabei kann es ebenfalls vorgesehen sein, dass darüber hinaus weitere Kommunikationsschnittstellen für weitere Kommunikationen (d. h. Kommunikationsmöglichkeiten), z. B. auch über Bluetooth und/oder WLAN, vorgesehen sind. Zudem ist es denkbar, dass bei Schritt a) auch neben der Mobilfunkkommunikation die Fahrzeugkommunikation überwacht wird, sodass insbesondere auch ein Fahrzeugeinfluss auf die Fahrzeugkommunikation detektiert werden kann. Damit kann die Lokalisation weiter verbessert werden.

Es kann im Rahmen der Erfindung vorgesehen sein, dass das mobile Kommunikationsgerät als ein mobiler ID-Geber ausgeführt ist und/oder dazu ausgeführt ist, eine Authentifizierung am Fahrzeug durchzuführen. Insbesondere ist das mobile Kommunikationsgerät ein Mobiltelefon und/oder ein Smartphone, welches eine derartige Software, insbesondere Smartphone-App, aufweist, dass es die Authentifizierung durchführen kann und damit als mobiler ID-Geber fungiert. Bevorzugt ist es möglich, dass hierzu eine spezielle Software auf das Kommunikationsgerät installiert wird, welches an die Auswertung gemäß Schritt b) angepasst ist.

Ebenfalls unter Schutz gestellt ist ein Computerprogrammprodukt und insbesondere eine App (Application software) für ein Smartphone und/oder für ein Fahrzeug und/oder dergleichen. Bevorzugt ist dabei das Computerprogrammprodukt und/oder die App dazu ausgeführt, zumindest teilweise ein erfindungsgemäßes Verfahren durchzuführen, und/oder einen Computer und/oder ein Smartphone und/oder eine Fahrzeugelektronik zumindest teilweise zur Durchführung des erfindungsgemäßen Verfahrens anzusteuern.

Optional ist es denkbar, dass das System das Fahrzeug umfasst, wobei das Fahrzeug eine geschlossene Karosseriebauform aufweist und/oder mit vollständig geschlossenem Fond und einem festen Dach ausgeführt ist. Hierdurch wird gewährleistet, dass der Fahrzeugeinfluss ausreichend ist, um gemäß Schritt b) zur Lokalisation zu dienen und/oder detektiert werden zu können.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung von Teilen eines erfindungsgemäßen Systems, wobei eine Seitenansicht eines Fahrzeugs dargestellt ist,
- Figur 2: eine schematische Darstellung von Teilen eines erfindungsgemäßen Systems, wobei eine Draufsicht eines Fahrzeugs dargestellt ist,
- Figur 3: eine schematische Darstellung von Teilen eines erfindungsgemäßen Systems,
- Figur 4: eine schematische Darstellung eines Auswertungssignals, und
- Figur 5: eine schematische Darstellung zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

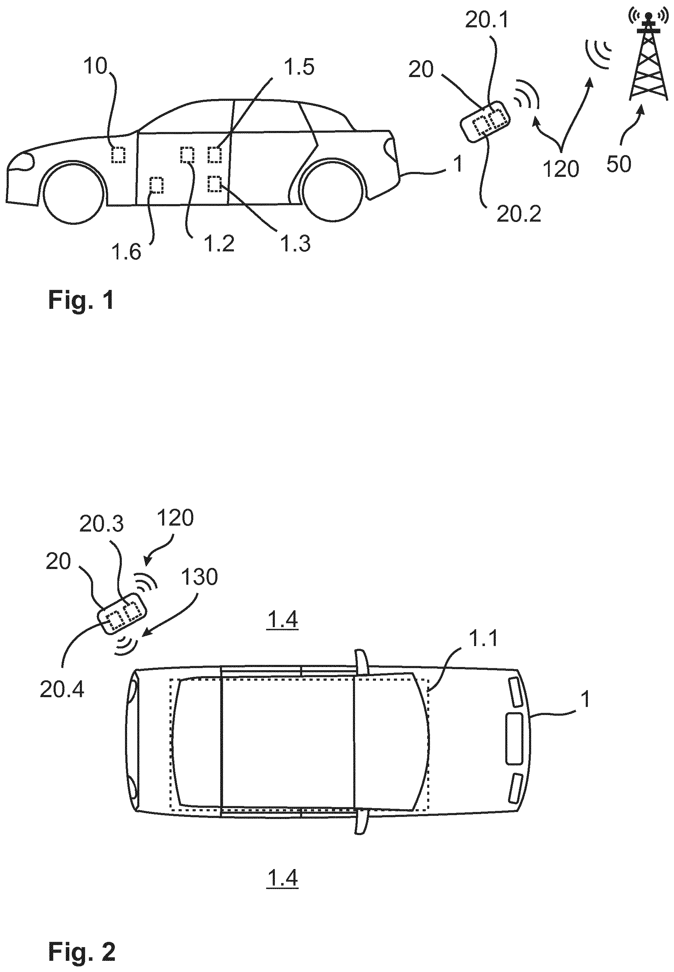

In den Figuren 1 und 2 sind schematische Teile eines erfindungsgemäßen Systems dargestellt. Es ist ein Fahrzeug 1 in einer Seitenansicht erkennbar, wobei eine Verriegelung des Fahrzeugs 1 bspw. durch die Nutzung eines Kommunikationsgeräts 20, z. B. einem Smartphone 20 oder einem ID-Geber 20, geöffnet werden kann. Hierzu ist es erforderlich, dass eine Authentifizierung mit dem Kommunikationsgerät 20 erfolgt. Alternativ ist es auch denkbar, dass zur Authentifizierung ein separater ID-Geber genutzt wird und das Kommunikationsgerät 20 bspw. lediglich zur Lokalisierung eingesetzt wird.

Das Fahrzeug 1 umfasst zumindest teilweise die Komponenten des erfindungsgemäßen Systems, insbesondere (zumindest teilweise) eine Überwachungsvorrichtung 10. Die Überwachungsvorrichtung 10 ist bspw. mit einer Fahrzeugelektronik verbunden und/oder in der Fahrzeugelektronik integriert. So kann die Fahrzeugelektronik bspw. eine Verarbeitungseinheit 1.3 und/oder einen Datenspeicher 1.5 und/oder eine Kommunikations-Gegenschnittstelle 1.6 und/oder zumindest einen Sensor 1.2 umfassen und/oder damit verbunden sein. Die Kommunikations-Gegenschnittstelle 1.6 dient dabei bspw. zur (weiteren oder zweiten, insbesondere Fahrzeug-) Kommunikation 130 mit dem mobilen Kommunikationsgerät 20. Es ist dabei denkbar, dass Komponenten der Fahrzeugelektronik des Fahrzeugs 1 elektrisch direkt oder indirekt miteinander verbunden sind, um bspw. einen Datenaustausch (z. B. zwischen dem Sensor 1.2 und der Überwachungsvorrichtung 10) zu gewährleisten.

Auch kann es vorgesehen sein, dass das Kommunikationsgerät 20 eine Elektronik aufweist, vorzugsweise eine Auswerteeinheit 20.1 und/oder eine Datenspeichereinheit 20.2. Wie in Figur 2 dargestellt ist, kann optional auch eine erste Kommunikationsschnittstelle 20.3 und/oder eine zweite Kommunikationsschnittstelle 20.4 des Kommunikationsgeräts 20 vorgesehen sein.

Die Verarbeitungseinheit 1.3 des Fahrzeugs 1 und/oder die Auswerteeinheit 20.1 des Kommunikationsgeräts 20 dienen dabei vorzugsweise zur Auswertung von Daten und/oder zur Auswertung des Auswertungssignals 110 gemäß Schritt b) des erfindungsgemäßen Verfahrens 100. Hierzu umfasst die Auswerteeinheit 20.1 und/oder die Verarbeitungseinheit 1.3 bspw. elektronische Komponenten, insbesondere einen Mikroprozessor und/oder einen digitalen Signalprozessor und/oder einen Flash-Speicher und/oder eine integrierte Schaltung, vorzugsweise eine anwendungsspezifische integrierte Schaltung (ASIC). Es kann dabei vorgesehen sein, dass das Auswertungssignal 110 gemäß Schritt b) zumindest teilweise durch das Kommunikationsgerät 20 selbst ausgewertet wird und dann zumindest ein (Teil-)Ergebnis dieser Auswertung an das Fahrzeug 1 übertragen wird. Alternativ oder zusätzlich ist es denkbar, dass das Auswertungssignal 110 vom Kommunikationsgerät 20 an das Fahrzeug 1 übertragen wird. Um diese Übertragung zu ermöglichen, kann es vorgesehen sein, dass eine (weitere oder zweite) Kommunikation 130 zwischen dem Kommunikationsgerät 20 und dem Fahrzeug 1 vorgesehen ist. Hierzu dient bspw. die Kommunikations-Gegenschnittstelle 1.6 des Fahrzeugs 1 und die zweite Kommunikationsschnittstelle 20.4 des Kommunikationsgeräts 20. Diese (zweite oder weitere) Kommunikation 130 ist bspw. eine Fahrzeug-Kommunikation 130 und/oder eine Bluetooth-Kommunikation 130 und/oder eine Mobilfunkkommunikation 130 und/oder eine NFC-Kommunikation 130 und/oder eine WLAN-Kommunikation 130. Auch ist es denkbar, dass über diese (weitere) Kommunikation 130 eine Authentifizierung des Kommunikationsgeräts 20 am Fahrzeug 1 erfolgt.

Es kann vorgesehen sein, dass eine (z. B. erste) Kommunikation 120, insbesondere eine Mobilfunkkommunikation 120, des Kommunikationsgeräts 20 gemäß Schritt a) des erfindungsgemäßen Verfahrens 100 überwacht wird. Auch kann neben der ersten Kommunikation 120 auch eine weitere Kommunikation 130, z. B. eine Fahrzeug-Kommunikation 130 zwischen dem Kommunikationsgerät 20 und dem Fahrzeug 1 vorgesehen sein. Auch können z. B. weitere Kommunikationen 120, 130 (d. h. weitere Kommunikationsmöglichkeiten), welche mit oder ohne Beteiligung des Fahrzeugs 1 erfolgen, vorgesehen sein. Vorzugsweise die erste Kommunikation 120 oder sämtliche (insbesondere erste oder auch weitere) Kommunikationen 120, 130 des Kommunikationsgeräts 20 erfolgen zwischen dem Kommunikationsgerät 20 und einer Basisstation 50 in einem Mobilfunknetz ohne Beteiligung des Fahrzeuges 1.

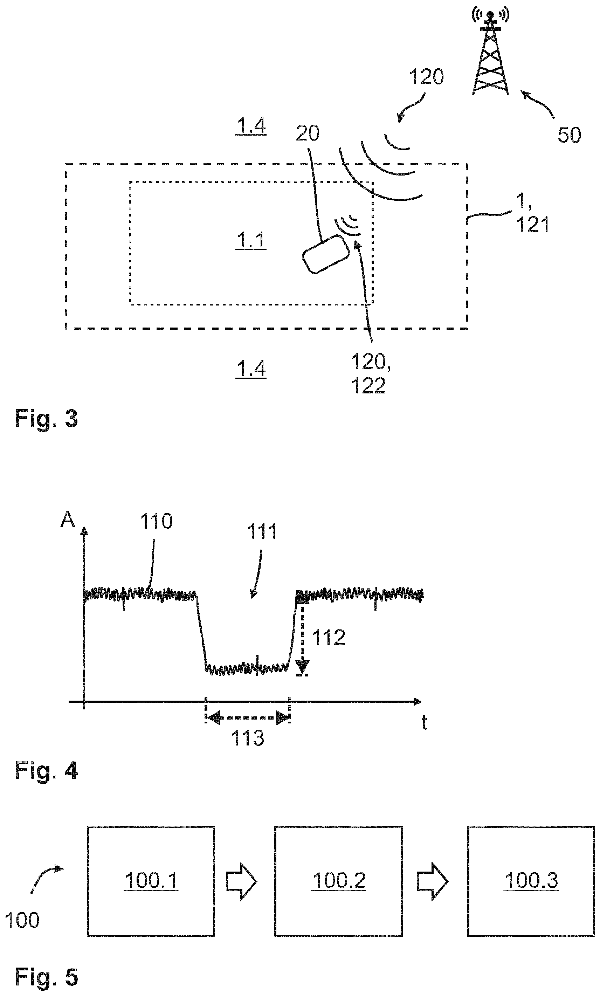

Die Kommunikation 120 ist beispielhaft anhand einer Mobilfunkkommunikation 120 in Figuren 1 und 2 verdeutlicht. Hierzu nutzt das Kommunikationsgerät 20 bspw. eine erste Kommunikationsschnittstelle 20.3, um ein Funksignal an eine Basisstation 50 eines Mobilfunknetzes zu übertragen. Die Übertragung erfolgt bspw. durch elektromagnetische Wellen, sodass die elektromagnetischen Wellen bzw. das Funksignal durch Einflüsse der Umgebung (Umgebungsbedingungen) beeinflusst werden. Allgemein ausgedrückt erfolgt bei der Kommunikation 120 eine Übertragung zumindest eines Kommunikationssignals, wobei die Übertragung von Einflüssen auf das Kommunikationssignal, z. B. Umgebungsbedingungen und/oder durch das Übertragungsmedium, abhängt. Da die Übertragung, insbesondere der Signalweg, auch durch das Fahrzeug 1, insbesondere durch eine Fahrzeugkarosserie, beeinflusst werden kann, kann hierbei von einem Fahrzeugeinfluss 121 (auf die Übertragung) gesprochen werden. So ist es bspw. denkbar, dass eine Abschwächung des Kommunikationssignals der Kommunikation 120 erfolgt, wenn sich das Kommunikationsgerät 20 innerhalb des Fahrzeugs 1 in einem Fahrzeuginnenraum 1.1 befindet. In diesem Fall muss das Kommunikationssignal der Kommunikation 120 bspw. erst zur Übertragung durch die Fahrzeugkarosserie des Fahrzeugs 1 dringen, um den Fahrzeug-Außenraum 1.4 und die Basisstation 50 zu erreichen. Hingegen erfolgt keine oder nur eine geringe Beeinflussung der Übertragung durch den Fahrzeugeinfluss 121, wenn sich das Kommunikationsgerät 20 außerhalb des Fahrzeugs 1 in dem Fahrzeugaußenraum 1.4 befindet. Zusätzlich ist es auch denkbar, dass unterschiedliche Fahrzeugeinflüsse 121 vorgesehen sind und/oder detektiert werden können, welche sich z. B. dadurch ergeben, dass sich das Kommunikationsgerät 20 in unterschiedlichen Bereichen des Fahrzeuginnenraums 1.1 aufhält. Die Fahrzeugkarosserie des Fahrzeugs 1 und/oder ein aktiver Fahrzeugeinfluss 121 des Fahrzeugs 1 bewirkt dabei bspw. eine Empfangspegelabschwächung 122, was schematisch durch Figur 3 dargestellt wird.

Die Auswertung gemäß einem erfindungsgemäßen Verfahren 100 ist in Figur 4 näher dargestellt anhand eines Auswertungssignals 110. Das Auswertungssignal 110 umfasst bspw. Informationen über eine Signalstärke, insbesondere anhand einer Signal-Amplitude A A. Vorzugsweise wird dabei ein zeitlicher Verlauf des Auswertungssignals 110, z. B. mittels einer Zeitreihenanalyse, ausgewertet. Somit kann es sich insbesondere bei dem Auswertungssignal 110 auch um ein Zeitreihensignal handeln. In Figur 4 ist dabei der Verlauf über die Zeit t dargestellt. Es ist erkennbar, dass bei Beginn einer Abschwächungsdauer 113 ein Signalsprung 111 auftritt. Dieser wird bspw. dadurch bewirkt, dass ein Bediener des Fahrzeugs 1 mit dem Kommunikationsgerät 20 in den Fahrzeuginnenraum 1.1 eintritt und/oder sämtliche Türen des Fahrzeugs 1 geschlossen werden. Dies bewirkt eine deutliche Beeinflussung der Übertragung bei der Kommunikation 120 durch den Fahrzeugeinfluss 121. Neben einem Signalsprung 111 kann bspw. auch ein Muster 111 ausgewertet werden, um den Fahrzeugeinfluss 121 zu detektieren. Insbesondere wird auch die Abschwächungsdauer 113 ausgewertet, sodass diese bspw. einen Schwellenwert übersteigen muss, damit der Fahrzeugeinfluss 121 positiv festgestellt wird und/oder festgestellt wird, dass sich das Kommunikationsgerät 120 im Fahrzeuginnenraum 1.1 befindet. Weiter kann es vorgesehen sein, dass bei der Auswertung auch ein Abschwächungsausmaß 112 berücksichtigt wird, sodass bspw. geringfügige Signalsprünge 111 nicht zur Detektion des Fahrzeugeinflusses 121 führen.

Gemäß Figur 5 wird schematisch ein erfindungsgemäßes Verfahren 100 visualisiert. Dabei wird gemäß einem ersten Verfahrensschritt 100.1 eine Überwachung der Kommunikation 120, insbesondere einer Mobilfunkkommunikation 120 und/oder einer Fahrzeugkommunikation 130, durchgeführt, wobei mindestens ein für die Kommunikation 120 spezifisches Auswertungssignal 110, insbesondere Kommunikationssignal 110, ermittelt wird. Gemäß einem zweiten Verfahrensschritt 100.2 erfolgt ein Detektieren eines Fahrzeugeinflusses 121 auf eine Übertragung bei der Kommunikation 120 anhand einer Auswertung des Auswertungssignals 110, um eine Lokalisierung des Kommunikationsgeräts 20 durchzuführen. Gemäß einem dritten Verfahrensschritt 100.3 wird die Funktion eines Fahrzeugs 1, insbesondere nur dann, aktiviert, wenn der Fahrzeugeinfluss 121 (positiv) detektiert wird. Zur Detektion kann auch bspw. ein GPS-Signal ausgewertet werden. Außerdem kann es möglich sein, dass ein RSSI bei der Kommunikation 120 gemessen wird, um den Fahrzeugeinfluss 121 zu detektieren. Insbesondere ändert dabei das Fahrzeug die Größe bzw. Amplitude eines Kommunikationssignals der Kommunikation 120, sodass eine solche Veränderung auf den Ursprung des Kommunikationsgeräts 20 hinweist.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeug
- 1.1: Fahrzeug-Innenraum
- 1.2: Sensor
- 1.3: Verarbeitungseinheit
- 1.4: Fahrzeug-Außenraum
- 1.5: Datenspeicher
- 1.6: Kommunikations-Gegenschnittstelle
- 10: Überwachungsvorrichtung
- 20: Kommunikationsgerät
- 20.1: Auswerteeinheit
- 20.2: Datenspeichereinheit
- 20.3: erste Kommunikationsschnittstelle
- 20.4: zweite Kommunikationsschnittstelle
- 50: Basisstation

- 100: Verfahren
- 100.1: erster Verfahrensschritt
- 100.2: zweiter Verfahrensschritt
- 100.3: dritter Verfahrensschritt
- 110: Auswertungssignal
- 111: Signalsprung, Muster
- 112: Abschwächungsausmaßes
- 113: Abschwächungsdauer
- 120: Kommunikation, Mobilfunk-Kommunikation, Fahrzeug-Kommunikation
- 121: Fahrzeugeinfluss
- 122: Empfangspegelabschwächung
- 130: Fahrzeug-Kommunikation, weitere Kommunikation

- t: Zeit
- A: Amplitude

## Patentansprüche

1. Verfahren (100) zur Aktivierung mindestens einer Funktion eines Fahrzeuges (1), vorzugsweise bei einem Sicherheitssystem des Fahrzeuges (1), wobei ein mobiles Kommunikationsgerät (20) zur Kommunikation (120) vorgesehen ist,
**gekennzeichnet durch die nachfolgenden Schritte:**
a) Überwachen der Kommunikation (120), wobei mindestens ein für die Kommunikation (120) spezifisches Auswertungssignal (110) ermittelt wird,
b) Detektieren eines Fahrzeugeinflusses (121) auf eine Übertragung bei der Kommunikation (120) anhand einer Auswertung des Auswertungssignals (110), um eine Lokalisation in der Form einer Innen-Außenraum-Erkennung des Kommunikationsgerätes (20) durchzuführen,
c) Aktivieren der Funktion des Fahrzeuges (1) in Abhängigkeit von der Detektion des Fahrzeugeinflusses (121),
wobei eine erste Funktion, die einen Zugang zum Fahrzeug gewährt, in einer ersten Abhängigkeit von der Detektion des Fahrzeugeinflusses aktivierbar ist, wenn die Detektion des Fahrzeugeinflusses unterbleibt,
und eine zweite Funktion, die einen Motorstart freigibt, in einer zweiten Abhängigkeit von der Detektion des Fahrzeugeinflusses aktivierbar ist, wenn der Fahrzeugeinfluss positiv detektiert wird.

2. Verfahren (100) nach Anspruch 1,
**dadurch gekennzeichnet,**
**dass** durch das mobile Kommunikationsgerät (20) die Kommunikation (120) als eine Mobilfunk-Kommunikation (120) über ein Mobilfunknetz durchgeführt wird, wobei vorzugsweise sich jeder der Kommunikationsteilnehmer bei der Kommunikation (120) von dem Fahrzeug (1) unterscheidet
und/oder dass durch das mobile Kommunikationsgerät (20) die Kommunikation (120) als eine Fahrzeug-Kommunikation (120) mit dem Fahrzeug (1), vorzugsweise über Bluetooth und/oder NFC und/oder Mobilfunk und/oder WLAN und/oder HF und/oder LF und/oder UWB und/oder GPS, durchgeführt wird, wobei vorzugsweise durch das mobile Kommunikationsgerät (20) eine weitere Kommunikation (130) über eine weitere Kommunikationstechnologie durchgeführt wird.

3. Verfahren (100) nach einem der vorhergehenden Ansprüche,
**dadurch gekennzeichnet,**
**dass** neben der Kommunikation (120) als Primärkommunikation (120) gemäß Schritt a) bei einer weiteren Kommunikation (130), insbesondere einer Fahrzeug-Kommunikation (130), die Überwachung durchgeführt wird, sodass das Auswertungssignal (110) für die weitere Kommunikation (130) spezifisch ist, wenn die Überwachung der Primärkommunikation (120) gemäß Schritt a) erfolglos ist, insbesondere bei zu niedriger Signalstärke bei der Primärkommunikation (120)
und/oder dass eine Ortung des Kommunikationsgerätes (20) durch GPS erfolgt, insbesondere zur Verbesserung der Genauigkeit der Lokalisation gemäß Schritt b)
und/oder dass anhand der Detektion des Fahrzeugeinflusses (121) gemäß Schritt b) festgestellt wird, wenn sich das Kommunikationsgerät (20) im Fahrzeug-Innenraum (1.1) befindet, wobei dann gemäß Schritt c) die Aktivierung der Funktion des Fahrzeuges (1) erfolgt, und vorzugsweise die Lokalisation gemäß Schritt b) derart erfolgt, dass ein Standort des Kommunikationsgerätes (20) im Fahrzeug-Innenraum (1.1) von zumindest einem weiteren Standort des Kommunikationsgerätes (20) außerhalb des Fahrzeuges (1) unterschieden wird.

4. Verfahren (100) nach einem der vorhergehenden Ansprüche,
**dadurch gekennzeichnet,**
**dass** bei der Auswertung des Auswertungssignals (110) gemäß Schritt b) ein Ausmaß des Fahrzeugeinflusses (121) auf die Kommunikation (120), insbesondere Mobilfunk-Kommunikation (120), bestimmt wird, und die Lokalisation des Kommunikationsgerätes (20) gemäß Schritt b) dadurch erfolgt, dass das Kommunikationsgerät (20) im Fahrzeug-Innenraum (1.1) geortet wird, wenn das Ausmaß und/oder das Auswertungssignal (110) für die Ortung im Fahrzeug-Innenraum (1.1) spezifisch ist, vorzugsweise wenn das Ausmaß eine Grenze übersteigt und/oder das Auswertungssignal (110) ein bestimmtes Muster (111) aufweist
und/oder dass das Überwachen der, insbesondere Mobilfunk-, Kommunikation (120) durch das Fahrzeug (1) getriggert wird, vorzugsweise bei einer Betätigung von mindestens einem Sensor (1.2) des Fahrzeuges (1)
und/oder dass der detektierte Fahrzeugeinfluss (121) für einen Störeinfluss auf die, insbesondere Mobilfunk-, Kommunikation (120) spezifisch ist, welcher durch die Karosserie des Fahrzeuges (1) verursacht wird, und sich insbesondere nur dann signifikant auf die, insbesondere Mobilfunk-, Kommunikation (120) des Kommunikationsgerätes (20) auswirkt, wenn sich das Kommunikationsgerät (20) im Fahrzeug-Innenraum (1.1) befindet.

5. Verfahren (100) nach einem der vorhergehenden Ansprüche,
**dadurch gekennzeichnet,**
**dass** bei der Auswertung gemäß Schritt b) zur Detektion des Fahrzeugeinflusses (121) ein Signalsprung (111) des Auswertungssignals (110) detektiert wird, insbesondere bei einem Signalstärke-Verlauf
und/oder dass das Auswertungssignal (110) in Abhängigkeit von einem Mobilfunksignal der Mobilfunk-Kommunikation (120) ermittelt wird, insbesondere in Abhängigkeit von der Signalstärke des Mobilfunksignals, wobei insbesondere das Mobilfunksignal als ein GSM- oder UMTS- oder LTE-Signal ausgeführt ist.

6. Verfahren (100) nach einem der vorhergehenden Ansprüche,
**dadurch gekennzeichnet,**
**dass** gemäß Schritt b) ein zeitlicher Verlauf des Auswertungssignals (110) ausgewertet wird, wobei insbesondere die Auswertung durch eine Zeitreihenanalyse erfolgt
und/oder dass gemäß Schritt b) ein Signalsprung (111) in einem zeitlichen Verlauf des Auswertungssignals (110) detektiert wird, welcher für ein Einbringen des Kommunikationsgerätes (20) vom Außenraum des Fahrzeuges (1) in den Fahrzeug-Innenraum (1.1) spezifisch ist, wobei der Signalsprung (111) vorzugsweise als ein statistisches Muster (111) im Auswertungssignal (110), bevorzugt in einem Amplituden- und/oder Phasen- und/oder Frequenzverlauf des Auswertungssignals (110), ausgewertet wird
und/oder dass gemäß Schritt b) der Fahrzeugeinfluss (121) ein Einfluss auf die Übertragung ist, welcher durch das Fahrzeug (1), vorzugsweise durch die Fahrzeugkarosserie, bewirkt wird, und eine Dämpfung eines Kommunikationssignals der Kommunikation (120) bewirkt, welche besonders bevorzugt durch eine Stufe im zeitlichen Amplitudenverlauf, insbesondere im Signalstärkeverlauf, bei dem Auswertungssignal (110) detektiert wird
und/oder dass gemäß Schritt b) der Fahrzeugeinfluss (121) ein Einfluss auf die Übertragung ist, welcher eine Veränderung eines durch das Kommunikationsgerät (20) und/oder Fahrzeug (1) empfangenen Kommunikationssignals der Kommunikation (120) bewirkt, insbesondere eine Frequenzveränderung und/oder eine Amplitudenveränderung und/oder eine Phasenveränderung bei dem Kommunikationssignal, wobei ein Muster (111) im Auswertungssignal (110) detektiert wird, welches für die Veränderung spezifisch ist.

7. Verfahren (100) nach einem der vorhergehenden Ansprüche,
**dadurch gekennzeichnet,**
**dass** der Fahrzeugeinfluss (121) anhand eines Abschwächungsausmaßes (112) und/oder anhand einer Abschwächungsdauer (113) einer Empfangspegelabschwächung (122) detektiert wird, welche anhand des Auswertungssignals (110) ermittelt wird, wobei insbesondere das Kommunikationsgerät (20) dann im Fahrzeug-Innenraum (1.1) lokalisiert wird,
- wenn die Abschwächungsdauer (113) mindestens 0,1 s oder mindestens 1 s oder mindestens 3 s oder mindestens 5 s beträgt, und/oder
- wenn das Abschwächungsausmaß (112) mindestens 1 dBm oder mindestens 5 dBm oder mindestens 10 dBm oder mindestens 15 dBm oder mindestens 30 dBm oder mindestens 50 dBm beträgt
und/oder dass der Fahrzeugeinfluss (121) anhand eines Abschwächungsausmaßes (112) im Auswertungssignal (110) detektiert wird, wobei das Auswertungssignal (110) vorzugsweise für einen Signal-Rauschabstand spezifisch ist, und vorzugsweise das Kommunikationsgerät (20) dann im Fahrzeug-Innenraum (1.1) lokalisiert wird, wenn das Abschwächungsausmaß (112) mindestens 5 dB oder mindestens 10 dB oder mindestens 20 dB oder mindestens 30 dB oder mindestens 40 dB oder mindestens 50 dB beträgt.

8. Verfahren (100) nach einem der vorhergehenden Ansprüche,
**dadurch gekennzeichnet,**
**dass** das Auswertungssignal (110) aus den Rohdaten des Kommunikationsgerätes (20) und/oder aus den Mobilfunkdaten des Kommunikationsgerätes (20), vorzugsweise durch eine Smartphone-Software, ermittelt wird, insbesondere anhand mindestens eines RSSI-Wertes.

9. Verfahren (100) nach einem der vorhergehenden Ansprüche,
**dadurch gekennzeichnet,**
**dass** die Kommunikation (120) als eine Mobilfunk-Kommunikation (120) eine Kommunikation (120) zwischen dem Kommunikationsgerät (20) und einer Basisstation (50) des Mobilfunknetzes ist, wobei bevorzugt das Auswertungssignal (110) für eine Qualität und/oder eine Empfangsstärke bei der Kommunikation (120) spezifisch ist,

10. Verfahren (100) nach einem der vorhergehenden Ansprüche,
**dadurch gekennzeichnet,**
**dass** die Übertragung bei der Kommunikation (120), insbesondere eines Mobilfunksignals, in Abhängigkeit von mindestens einer Übertragungsbedingung erfolgt, wobei die Übertragungsbedingung mindestens einen Einflussfaktor für die Ausbreitung von Funkwellen, bevorzugt Mobilfunkwellen, umfasst, insbesondere eine elektrische Abschirmung und/oder eine Dämpfung durch eine Karosserie des Fahrzeuges (1), welche eine Signalveränderung, insbesondere Signalabschwächung, des Mobilfunksignals bewirkt, die anhand des Auswertungssignals (110) detektiert wird
und/oder dass gemäß Schritt b) die Auswertung des Auswertungssignals (110) durch eine Signalverlaufsanalyse und/oder eine Mustererkennung erfolgt, sodass der Fahrzeugeinfluss (121) detektiert wird, wobei bevorzugt eine statistische Mustererkennung zum Einsatz kommt
und/oder dass gemäß Schritt b) die Auswertung des Auswertungssignals (110) durch das Kommunikationsgerät (20), vorzugsweise durch eine Auswerteeinheit (20.1) des Kommunikationsgerätes (20), erfolgt, und ein Ergebnis der Auswertung und/oder der Detektion anschließend über eine Fahrzeug-Kommunikation (130), vorzugsweise eine Bluetooth- und/oder Bluetooth-Low-Energy-Kommunikation (130), an das Fahrzeug (1) übertragen wird
und/oder dass gemäß Schritt b) die Auswertung des Auswertungssignals (110) durch eine Verarbeitungseinheit (1.3) des Fahrzeuges (1) durchgeführt wird, wobei vorzugsweise das Auswertungssignal (110) über eine Fahrzeug-Kommunikation (130) von dem Kommunikationsgerät (20) an die Verarbeitungseinheit (1.3) übertragen wird.

11. Verfahren (100) nach einem der vorhergehenden Ansprüche,
**dadurch gekennzeichnet,**
**dass** das Überwachen der Kommunikation (120) gemäß Schritt a) nur dann initiiert wird, wenn zumindest eines der folgenden Ereignisse durch das Fahrzeug (1) detektiert wird:
- Betätigung eines Sensors (1.2) an einem Sitz des Fahrzeuges (1), insbesondere des Fahrersitzes, vorzugsweise eines Sitzkontaktes,
- Betätigung einer Kupplung und/oder eines Bremspedals des Fahrzeuges (1),
- Annäherung an das Fahrzeug (1), insbesondere durch einen Annäherungssensor des Fahrzeuges (1),
- Durchführung einer Aktivierungshandlung an einem Türgriff, insbesondere Türaußengriff, des Fahrzeuges (1),
- Betätigung eines Tasters, insbesondere eines Start-Stopp-Tasters, und/oder Schalters und/oder einer Eingabevorrichtung im Fahrzeug-Innenraum (1.1), insbesondere zum Motorstart,
- Erfassung eines Unterschreitens eines vordefinierten Abstands des Kommunikationsgerätes (20) zum Fahrzeug (1), vorzugsweise anhand einer Ortung, bevorzugt einer GPS-Ortung, insbesondere durch das Kommunikationsgerät (20),
- Auswertung eines Signals einer Fahrzeug-Kommunikation (130), insbesondere eines Bluetooth-Signals,
- Empfang eines Wecksignals durch das Kommunikationsgerät (20), wobei das Wecksignal von dem Fahrzeug (1) ausgesendet wird.

12. Verfahren (100) nach einem der vorhergehenden Ansprüche,
**dadurch gekennzeichnet,**
**dass** die Funktion des Fahrzeuges (1) gemäß Schritt c) nur dann aktiviert wird, wenn zuvor eine erfolgreiche Authentifizierung mit dem Kommunikationsgerät (20) erfolgt ist, wobei vorzugsweise in Abhängigkeit von der Authentifizierung eine Sicherheitsfunktion des Fahrzeuges (1), bevorzugt eine Zentralverriegelung, angesteuert wird.

13. System zur Aktivierung mindestens einer Funktion eines Fahrzeuges (1), aufweisend:
- ein mobiles Kommunikationsgerät (20) zur Kommunikation (120),
- eine Überwachungsvorrichtung (10) zur Überwachung der Kommunikation (120), wobei
durch die Überwachungsvorrichtung (10) mindestens ein für die Kommunikation (120) spezifisches Auswertungssignal (110) ermittelbar ist, und ein Fahrzeugeinfluss (121) des Fahrzeuges (1) auf eine Übertragung bei der Kommunikation (120) anhand einer Auswertung des Auswertungssignals (110) detektierbar ist, um eine Lokalisation in der Form einer Innen-Außenraum-Erkennung des Kommunikationsgerätes (20) durchzuführen, sodass die Funktion des Fahrzeuges (1) in Abhängigkeit von der Detektion des Fahrzeugeinflusses (121) aktivierbar ist,
wobei eine erste Funktion, die einen Zugang zum Fahrzeug gewährt, in einer ersten Abhängigkeit von der Detektion des Fahrzeugeinflusses aktivierbar ist, wenn die Detektion des Fahrzeugeinflusses unterbleibt,
und eine zweite Funktion, die einen Motorstart freigibt, in einer zweiten Abhängigkeit von der Detektion des Fahrzeugeinflusses aktivierbar ist, wenn der Fahrzeugeinfluss positiv detektiert wird.

14. System nach einem der vorhergehenden Ansprüche,
**dadurch gekennzeichnet,**
**dass** das mobile Kommunikationsgerät (20) zur Mobilfunk-Kommunikation (120) über ein Mobilfunknetz über eine erste Kommunikationsschnittstelle (20.3), und zur Fahrzeug-Kommunikation (130) mit dem Fahrzeug (1) über eine zweite Kommunikationsschnittstelle (20.4) ausgeführt ist
und/oder dass das mobile Kommunikationsgerät (20) als ein mobiler ID-Geber ausgeführt ist und/oder dazu ausgeführt ist, eine Authentifizierung am Fahrzeug (1) durchzuführen
und/oder dass das System das Fahrzeug (1) umfasst, wobei das Fahrzeug (1) eine geschlossene Karosseriebauform aufweist und/oder mit vollständig geschlossenem Fond und einem festen Dach ausgeführt ist.

15. System nach einem der vorhergehenden Ansprüche,
**dadurch gekennzeichnet,**
**dass** das System gemäß einem Verfahren (100) nach einem der vorhergehenden Ansprüche betreibbar ist.

## Claims

1. A method (100) for activating at least one function of a vehicle (1), preferably in a safety system of the vehicle (1), wherein a mobile communication device (20) is provided for communication (120),
**characterized by** the following steps:
a) monitoring the communication (120), wherein at least one evaluation signal (110) specific to the communication (120) is determined,
b) detecting a vehicle influence (121) on a transmission during the communication (120) based on an evaluation of the evaluation signal (110) in order to perform localization in the form of an indoor-outdoor detection of the communication device (20),
c) activating the function of the vehicle (1) depending on the detection of the vehicle influence (121),
wherein a first function, which grants access to the vehicle, is activatable in a first dependency on the detection of the vehicle influence if the detection of the vehicle influence does not occur,
and a second function, which enables engine start, is activatable in a second dependency on the detection of the vehicle influence if the vehicle influence is detected positively.

2. Method (100) according to claim 1,
**characterized in that** the communication (120) is carried out by the mobile communication device (20) as a mobile communication (120) via a mobile network, wherein preferably each of the communication participants in the communication (120) is distinct from the vehicle (1)
and/or that the mobile communication device (20) performs the communication (120) as vehicle communication (120) with the vehicle (1), preferably via Bluetooth and/or NFC and/or cellular and/or Wi-Fi and/or HF and/or LF and/or UWB and/or GPS, wherein preferably the mobile communication device (20) performs further communication (130) via a further communication technology.

3. Method (100) according to one of the preceding claims,
**characterized in that**, in addition to the communication (120) as primary communication (120) according to step a), monitoring is performed during a further communication (130), in particular a vehicle communication (130), such that the evaluation signal (110) is specific to the further communication (130) if the monitoring of the primary communication (120) according to step a) is unsuccessful, in particular due to insufficient signal strength in the primary communication (120)
and/or that the communication device (20) is located via GPS, in particular to improve the accuracy of the localization according to step b)
and/or that, based on the detection of the vehicle influence (121) according to step b), it is determined whether the communication device (20) is located in the vehicle interior (1.1), in which case the function of the vehicle (1) is activated according to step c), and preferably the localization according to step b) is performed such that a location of the communication device (20) in the vehicle interior (1.1) is distinguished from at least one other location of the communication device (20) outside the vehicle (1).

4. Method (100) according to one of the preceding claims,
**characterized in that**, when evaluating the evaluation signal (110) in accordance with step b), an extent of the vehicle influence (121) on the communication (120), in particular mobile communication (120), is determined, and the localization of the communication device (20) in accordance with step b) is performed by locating the communication device (20) in the vehicle interior (1.1) if the extent and/or the evaluation signal (110) is specific to the location within the vehicle interior (1.1), preferably if the extent exceeds a threshold and/or the evaluation signal (110) exhibits a specific pattern (111)
and/or that the monitoring of the communication (120), in particular mobile communication, is triggered by the vehicle (1), preferably upon activation of at least one sensor (1.2) of the vehicle (1)
and/or that the detected vehicle influence (121) is specific to an interference effect on the, in particular mobile, communication (120), which is caused by the body of the vehicle (1), and in particular only has a significant effect on the, in particular mobile, communication (120) of the communication device (20) when the communication device (20) is located in the vehicle interior (1.1).

5. Method (100) according to one of the preceding claims,
**characterized in that** during the evaluation according to step b) for detecting the vehicle influence (121), a signal jump (111) of the evaluation signal (110) is detected, in particular in a signal strength curve
and/or that the evaluation signal (110) is determined as a function of a mobile communication signal of the mobile communication (120), in particular as a function of the signal strength of the mobile communication signal, wherein in particular the mobile communication signal is implemented as a GSM or UMTS or LTE signal.

6. Method (100) according to one of the preceding claims,
**characterized in that**, in accordance with step b), a temporal progression of the evaluation signal (110) is evaluated, wherein the evaluation is performed in particular by means of a time series analysis
and/or that, in accordance with step b), a signal jump (111) is detected in a time course of the evaluation signal (110), which is specific to the introduction of the communication device (20) from the exterior of the vehicle (1) into the vehicle interior (1.1), wherein the signal jump (111) is preferably evaluated as a statistical pattern (111) in the evaluation signal (110), preferably in an amplitude and/or phase and/or frequency profile of the evaluation signal (110)
and/or that, according to step b), the vehicle influence (121) is an influence on the transmission caused by the vehicle (1), preferably by the vehicle body, and causes attenuation of a communication signal of the communication (120), which is particularly preferably detected by a step in the temporal amplitude profile, in particular in the signal strength profile, of the evaluation signal (110)
and/or that, according to step b), the vehicle influence (121) is an influence on the transmission which causes a change in a communication signal of the communication (120) received by the communication device (20) and/or the vehicle (1), in particular a frequency change and/or an amplitude change and/or a phase change in the communication signal, wherein a pattern (111) is detected in the evaluation signal (110) that is specific to the change.

7. Method (100) according to one of the preceding claims,
**characterized in that** the vehicle influence (121) is detected based on an attenuation level (112) and/or an attenuation duration (113) of a received signal level attenuation (122), which is determined based on the evaluation signal (110), wherein, in particular, the communication device (20) is then located in the vehicle interior (1.1),
- if the attenuation duration (113) is at least 0.1 s or at least 1 s or at least 3 s or at least 5 s, and/or
- if the attenuation level (112) is at least 1 dBm or at least 5 dBm or at least 10 dBm or at least 15 dBm or at least 30 dBm or at least 50 dBm
and/or that the vehicle influence (121) is detected based on an attenuation level (112) in the evaluation signal (110), wherein the evaluation signal (110) is preferably specific to a signal-to-noise ratio, and preferably the communication device (20) is then localized in the vehicle interior (1.1) when the attenuation level (112) is at least 5 dB or at least 10 dB or at least 20 dB or at least 30 dB or at least 40 dB or at least 50 dB.

8. Method (100) according to one of the preceding claims,
**characterized in that** the evaluation signal (110) is determined from the raw data of the communication device (20) and/or from the mobile communication data of the communication device (20), preferably by smartphone software, in particular based on at least one RSSI value.

9. Method (100) according to one of the preceding claims,
**characterized in that** the communication (120), as a mobile communication (120), is a communication (120) between the communication device (20) and a base station (50) of the mobile network, wherein the evaluation signal (110) is preferably specific to a quality and/or a reception strength of the communication (120).

10. Method (100) according to one of the preceding claims,
**characterized in that** the transmission during the communication (120), in particular of a mobile radio signal, takes place depending on at least one transmission condition, wherein the transmission condition comprises at least one influencing factor for the propagation of radio waves, preferably mobile radio waves, in particular electrical shielding and/or attenuation by a body of the vehicle (1), which causes a signal change, in particular signal attenuation, of the mobile radio signal, which is detected on the basis of the evaluation signal (110)
and/or that, in accordance with step b), the evaluation of the evaluation signal (110) is performed by means of a signal waveform analysis and/or pattern recognition, so that the vehicle influence (121) is detected, wherein preferably a statistical pattern recognition is used
and/or that, in accordance with step b), the evaluation of the evaluation signal (110) is performed by the communication device (20), preferably by an evaluation unit (20.1) of the communication device (20), and a result of the evaluation and/or detection is subsequently transmitted to the vehicle (1) via vehicle communication (130), preferably Bluetooth and/or Bluetooth Low Energy communication (130)
and/or that, in accordance with step b), the evaluation of the evaluation signal (110) is performed by a processing unit (1.3) of the vehicle (1), wherein the evaluation signal (110) is preferably transmitted from the communication device (20) to the processing unit (1.3) via a vehicle communication (130).

11. Method (100) according to one of the preceding claims,
**characterized in that** the monitoring of the communication (120) according to step a) is initiated only if at least one of the following events is detected by the vehicle (1):
- activation of a sensor (1.2) on a seat of the vehicle (1), in particular the driver's seat, preferably a seat contact,
- depression of a clutch and/or a brake pedal of the vehicle (1),
- approach to the vehicle (1), in particular by a proximity sensor of the vehicle (1),
- performing an activation action on a door handle, in particular an exterior door handle, of the vehicle (1),
- pressing a button, in particular a start-stop button, and/or a switch and/or an input device in the vehicle interior (1.1), in particular to start the engine,
- detecting when the communication device (20) comes within a predefined distance of the vehicle (1), preferably by means of positioning, preferably GPS positioning, in particular by the communication device (20),
- evaluation of a signal of a vehicle communication (130), in particular a Bluetooth signal,
- receiving a wake-up signal by the communication device (20), wherein the wake-up signal is transmitted by the vehicle (1).

12. Method (100) according to one of the preceding claims,
**characterized in that** the function of the vehicle (1) is activated in accordance with step c) only if successful authentication with the communication device (20) has previously taken place, wherein, preferably depending on the authentication, a security function of the vehicle (1), preferably a central locking system, is activated.

13. A system for activating at least one function of a vehicle (1), comprising:
- a mobile communication device (20) for communication (120),
- a monitoring device (10) for monitoring the communication (120), wherein
the monitoring device (10) can determine at least one evaluation signal (110) specific to the communication (120), and a vehicle influence (121) of the vehicle (1) on a transmission during the communication (120) can be detected based on an evaluation of the evaluation signal (110) in order to perform localization in the form of an indoor-outdoor detection of the communication device (20), such that the function of the vehicle (1) can be activated depending on the detection of the vehicle influence (121),
wherein a first function, which grants access to the vehicle, is activatable in a first dependency on the detection of the vehicle influence if the vehicle influence is not detected,
and a second function, which enables engine start, is activatable in a second dependency on the detection of the vehicle influence if the vehicle influence is detected positively.

14. System according to one of the preceding claims,
**characterized in that** the mobile communication device (20) is configured for mobile communication (120) via a mobile network through a first communication interface (20.3), and for vehicle communication (130) with the vehicle (1) via a second communication interface (20.4)
and/or that the mobile communication device (20) is configured as a mobile ID transmitter and/or is configured to perform authentication on the vehicle (1)
and/or that the system comprises the vehicle (1), wherein the vehicle (1) has a closed body structure and/or is configured with a fully enclosed rear compartment and a fixed roof.

15. System according to one of the preceding claims,
**characterized in that** the system is operable according to a method (100) according to one of the preceding claims.

## Revendications

1. Procédé (100) pour activer au moins une fonction d'un véhicule (1), de préférence dans un système de sécurité du véhicule (1), dans lequel un appareil de communication mobile (20) est prévu pour la communication (120),
**caractérisé par** les étapes suivantes :
a) surveiller la communication (120), au moins un signal d'évaluation (110) spécifique à la communication (120) étant déterminé,
b) détection d'une influence du véhicule (121) sur une transmission lors de la communication (120) à l'aide d'une évaluation du signal d'évaluation (110), afin d'effectuer une localisation sous la forme d'une détection intérieur-extérieur de l'appareil de communication (20),
c) activation de la fonction du véhicule (1) en fonction de la détection de l'influence du véhicule (121),
une première fonction, qui permet l'accès au véhicule, pouvant être activée en fonction de la détection de l'influence du véhicule si cette détection n'a pas lieu,
et une deuxième fonction, qui autorise le démarrage du moteur, pouvant être activée en fonction de la détection de l'influence du véhicule lorsque celle-ci est détectée positivement.

2. Procédé (100) selon la revendication 1,
**caractérisé en ce que** la communication (120) est effectuée par l'appareil de communication mobile (20) sous la forme d'une communication mobile (120) via un réseau mobile, chacun des participants à la communication (120) étant de préférence distinct du véhicule (1)
et/ou **en ce que** la communication (120) est effectuée par l'appareil de communication mobile (20) sous la forme d'une communication avec le véhicule (1), de préférence via Bluetooth et/ou NFC et/ou la téléphonie mobile et/ou le Wi-Fi et/ou HF et/ou LF et/ou UWB et/ou GPS, une autre communication (130) étant de préférence effectuée par l'appareil de communication mobile (20) via une autre technologie de communication.

3. Procédé (100) selon l'une des revendications précédentes,
**caractérisé en ce qu'**outre la communication (120) en tant que communication primaire (120) selon l'étape a), lors d'une autre communication (130), en particulier une communication avec le véhicule (130), la surveillance est effectuée de telle sorte que le signal d'évaluation (110) soit spécifique à l'autre communication (130) lorsque la surveillance de la communication primaire (120) selon l'étape a) est infructueuse, en particulier en cas de puissance de signal trop faible lors de la communication primaire (120)
et/ou qu'une localisation de l'appareil de communication (20) est effectuée par GPS, en particulier pour améliorer la précision de la localisation conformément à l'étape b)
et/ou que, sur la base de la détection de l'influence du véhicule (121) conformément à l'étape b), il est déterminé si l'appareil de communication (20) se trouve dans l'habitacle du véhicule (1.1), l'activation de la fonction du véhicule (1) s'effectuant alors conformément à l'étape c), et la localisation s'effectuant de préférence conformément à l'étape b) de telle sorte qu'un emplacement de l'appareil de communication (20) dans l'habitacle du véhicule (1.1) soit distingué d'au moins un autre emplacement de l'appareil de communication (20) à l'extérieur du véhicule (1).

4. Procédé (100) selon l'une des revendications précédentes,
**caractérisé en ce que**, lors de l'évaluation du signal d'évaluation (110) conformément à l'étape b), on détermine l'ampleur de l'influence du véhicule (121) sur la communication (120), en particulier la communication mobile (120), et que la localisation de l'appareil de communication (20) conformément à l'étape b) s'effectue en détectant l'appareil de communication (20) dans l'habitacle du véhicule (1.1) lorsque l'ampleur et/ou le signal d'évaluation (110) est spécifique à la localisation dans l'habitacle du véhicule (1.1), de préférence lorsque l'ampleur dépasse une limite et/ou que le signal d'évaluation (110) présente un certain motif (111)
et/ou que la surveillance de la communication (120), en particulier de téléphonie mobile, est déclenchée par le véhicule (1), de préférence lors de l'actionnement d'au moins un capteur (1.2) du véhicule (1)
et/ou que l'influence du véhicule détectée (121) est spécifique à une interférence sur la communication (120), notamment de téléphonie mobile, qui est causée par la carrosserie du véhicule (1), et n'a un effet significatif sur la communication (120), notamment de téléphonie mobile, de l'appareil de communication (20) que lorsque l'appareil de communication (20) se trouve dans l'habitacle du véhicule (1.1).

5. Procédé (100) selon l'une des revendications précédentes,
**caractérisé en ce que**, lors de l'évaluation selon l'étape b) visant à détecter l'influence du véhicule (121), un saut de signal (111) du signal d'évaluation (110) est détecté, en particulier dans le cas d'une courbe d'intensité de signal
et/ou **en ce que** le signal d'évaluation (110) est déterminé en fonction d'un signal de téléphonie mobile de la communication mobile (120), en particulier en fonction de l'intensité du signal de téléphonie mobile, le signal de téléphonie mobile étant notamment un signal GSM, UMTS ou LTE.

6. Procédé (100) selon l'une des revendications précédentes,
**caractérisé en ce que**, conformément à l'étape b), une évolution temporelle du signal d'évaluation (110) est évaluée, l'évaluation s'effectuant notamment par une analyse de séries chronologiques
et/ou **en ce que**, conformément à l'étape b), un saut de signal (111) est détecté dans une courbe temporelle du signal d'évaluation (110), lequel saut est spécifique à l'introduction de l'appareil de communication (20) de l'espace extérieur du véhicule (1) vers l'habitacle du véhicule (1.1), le saut de signal (111) étant de préférence évalué comme un motif statistique (111) dans le signal d'évaluation (110), de préférence dans une courbe d'amplitude et/ou de phase et/ou de fréquence du signal d'évaluation (110) et/ou que, conformément à l'étape b), l'influence du véhicule (121) est une influence sur la transmission qui est provoquée par le véhicule (1), de préférence par la carrosserie du véhicule, et provoque une atténuation d'un signal de communication de la communication (120), laquelle est détectée de manière particulièrement préférée par un palier dans la courbe d'amplitude temporelle, en particulier dans la courbe d'intensité du signal, du signal d'évaluation (110)
et/ou que, conformément à l'étape b), l'influence du véhicule (121) est une influence sur la transmission qui provoque une modification d'un signal de communication de la communication (120) reçu par l'appareil de communication (20) et/ou le véhicule (1), en particulier une variation de fréquence et/ou une variation d'amplitude et/ou une variation de phase du signal de communication, un motif (111) spécifique à cette variation étant détecté dans le signal d'évaluation (110).

7. Procédé (100) selon l'une des revendications précédentes,
**caractérisé en ce que** l'influence du véhicule (121) est détectée à l'aide d'un degré d'atténuation (112) et/ou d'une durée d'atténuation (113) d'une atténuation du niveau de réception (122), laquelle est déterminée à partir du signal d'évaluation (110), l'appareil de communication (20) étant alors localisé, en particulier, dans l'habitacle du véhicule (1.1),
- lorsque la durée d'atténuation (113) est d'au moins 0,1 s ou d'au moins 1 s ou d'au moins 3 s ou d'au moins 5 s, et/ou
- lorsque le degré d'atténuation (112) est d'au moins 1 dBm ou d'au moins 5 dBm ou d'au moins 10 dBm ou d'au moins 15 dBm ou d'au moins 30 dBm ou d'au moins 50 dBm
et/ou que l'influence du véhicule (121) est détectée à l'aide d'un degré d'atténuation (112) dans le signal d'évaluation (110), le signal d'évaluation (110) étant de préférence spécifique à un rapport signal/bruit, et de préférence, l'appareil de communication (20) est alors localisé dans l'habitacle du véhicule (1.1) lorsque le degré d'atténuation (112) est d'au moins 5 dB ou d'au moins 10 dB ou d'au moins 20 dB ou d'au moins 30 dB ou d'au moins 40 dB ou d'au moins 50 dB.

8. Procédé (100) selon l'une des revendications précédentes,
**caractérisé en ce que** le signal d'évaluation (110) est déterminé à partir des données brutes de l'appareil de communication (20) et/ou à partir des données de téléphonie mobile de l'appareil de communication (20), de préférence par un logiciel de smartphone, notamment à l'aide d'au moins une valeur RSSI.

9. Procédé (100) selon l'une des revendications précédentes,
**caractérisé en ce que** la communication (120), en tant que communication mobile (120), est une communication (120) entre l'appareil de communication (20) et une station de base (50) du réseau mobile, le signal d'évaluation (110) étant de préférence spécifique à une qualité et/ou à une intensité de réception lors de la communication (120).

10. Procédé (100) selon l'une des revendications précédentes,
**caractérisé en ce que** la transmission lors de la communication (120), en particulier d'un signal de téléphonie mobile, s'effectue en fonction d'au moins une condition de transmission, la condition de transmission comprenant au moins un facteur d'influence sur la propagation des ondes radio, de préférence des ondes de téléphonie mobile, en particulier un blindage électrique et/ou une atténuation due à la carrosserie du véhicule (1), qui provoque une modification du signal, en particulier un affaiblissement du signal de téléphonie mobile, qui est détectée à l'aide du signal d'évaluation (110)
et/ou que, conformément à l'étape b), l'évaluation du signal d'évaluation (110) s'effectue par une analyse de la courbe du signal et/ou une reconnaissance de formes, de sorte que l'influence du véhicule (121) soit détectée, une reconnaissance statistique de formes étant de préférence utilisée
et/ou que, conformément à l'étape b), l'évaluation du signal d'évaluation (110) est effectuée par l'appareil de communication (20), de préférence par une unité d'évaluation (20.1) de l'appareil de communication (20), et qu'un résultat de l'évaluation et/ou de la détection est ensuite transmis au véhicule (1) via une communication avec le véhicule (130), de préférence une communication Bluetooth et/ou Bluetooth Low Energy (130)
et/ou que, conformément à l'étape b), l'évaluation du signal d'évaluation (110) est effectuée par une unité de traitement (1.3) du véhicule (1), le signal d'évaluation (110) étant de préférence transmis de l'appareil de communication (20) à l'unité de traitement (1.3) via une communication avec le véhicule (130).

11. Procédé (100) selon l'une des revendications précédentes,
**caractérisé en ce que** la surveillance de la communication (120) selon l'étape a) n'est initiée que si au moins l'un des événements suivants est détecté par le véhicule (1) :
- l'actionnement d'un capteur (1.2) sur un siège du véhicule (1), en particulier le siège conducteur, de préférence un capteur de contact de siège,
- l'actionnement d'un embrayage et/ou d'une pédale de frein du véhicule (1),
- approche du véhicule (1), notamment par un capteur de proximité du véhicule (1),
- exécution d'une action d'activation sur une poignée de porte, en particulier une poignée extérieure, du véhicule (1),
- actionnement d'un bouton-poussoir, en particulier d'un bouton marche-arrêt, et/ou d'un commutateur et/ou d'un dispositif de saisie dans l'habitacle du véhicule (1.1), en particulier pour le démarrage du moteur,
- détection du passage en dessous d'une distance prédéfinie entre l'appareil de communication (20) et le véhicule (1), de préférence au moyen d'une localisation, de préférence une localisation GPS, notamment par l'appareil de communication (20),
- évaluation d'un signal d'une communication avec le véhicule (130), en particulier d'un signal Bluetooth,
- réception d'un signal de réveil par l'appareil de communication (20), le signal de réveil étant émis par le véhicule (1).

12. Procédé (100) selon l'une des revendications précédentes,
**caractérisé en ce que** la fonction du véhicule (1) n'est activée conformément à l'étape c) que si une authentification réussie avec l'appareil de communication (20) a eu lieu au préalable, une fonction de sécurité du véhicule (1), de préférence un verrouillage centralisé, étant commandée de préférence en fonction de l'authentification.

13. Système pour l'activation d'au moins une fonction d'un véhicule (1), comprenant :
- un appareil de communication mobile (20) destiné à la communication (120),
- un dispositif de surveillance (10) destiné à surveiller la communication (120), dans lequel
le dispositif de surveillance (10) permet de déterminer au moins un signal d'évaluation (110) spécifique à la communication (120), et une influence du véhicule (121) du véhicule (1) sur une transmission lors de la communication (120) peut être détectée à l'aide d'une évaluation du signal d'évaluation (110), afin d'effectuer une localisation sous la forme d'une détection intérieur-extérieur de l'appareil de communication (20), de sorte que la fonction du véhicule (1) peut être activée en fonction de la détection de l'influence du véhicule (121),
une première fonction, qui permet l'accès au véhicule, pouvant être activée en fonction de la détection de l'influence du véhicule, si la détection de l'influence du véhicule n'a pas lieu,
et une deuxième fonction, qui autorise le démarrage du moteur, pouvant être activée en fonction de la détection de l'influence du véhicule lorsque celle-ci est détectée positivement.

14. Système selon l'une des revendications précédentes,
**caractérisé en ce que** l'appareil de communication mobile (20) est conçu pour la communication mobile (120) via un réseau mobile par l'intermédiaire d'une première interface de communication (20.3), et pour la communication avec le véhicule (130) via une deuxième interface de communication (20.4)
et/ou **en ce que** l'appareil de communication mobile (20) est conçu comme un émetteur d'identification mobile et/ou est conçu pour effectuer une authentification sur le véhicule (1)
et/ou que le système comprend le véhicule (1), le véhicule (1) présentant une structure de carrosserie fermée et/ou étant conçu avec un arrière entièrement fermé et un toit fixe.

15. Système selon l'une des revendications précédentes,
**caractérisé en ce que** le système peut être mis en œuvre selon un procédé (100) selon l'une des revendications précédentes.
